# EUROPEAN PATENT APPLICATION

(11) **EP 1 225 550 A2**
(43) Date of publication of application: **24.07.2002**
(21) Application number: 01104710.7
(22) Date of filing: 26.02.2001
(51) Int. Cl.: G07F 17/32, G07F 7/02

(54) **Data processing method in a smart card system**

(30) Priority: 01.12.2000 JP 2000367394
(71) Applicant: Hitachi, Ltd., Chiyoda-ku, Tokyo 101-8010 (JP)
(72) Inventor: Sukeda, Hiroko, c/oHitachi Ltd., Int. Prop. Group, , Chiyoda-ku, Tokyo 100-8220 (JP); Ohki, Masaru, c/oHitachi Ltd., Int. Prop. Group, , Chiyoda-ku, Tokyo 100-8220 (JP); Ohzeki, Kazuhiro, c/oHitachi Ltd., Int. Pro. Group, , Chiyoda-ku, Tokyo 100-8220 (JP); Fujita, Kazuo, c/oHitachi Ltd., Int. Prop. Group, , Chiyoda-ku, Tokyo 100-8220 (JP)
(74) Representative: Strehl Schübel-Hopf & Partner

(57) **Abstract**

A data processing method for smart card system provides a highly safe and convenient operation management method in game-linked point system for playing a game on a smart card, especially stressing returned goods process and prevention of illegal operation. After said rights to play game are supplied to a smart card from a shop according to the usage of the card, when the event that the transaction causing the supply of rights to play game is canceled, the designated rights to play game are canceled. When a game is played based on the rights to play game, points are supplied according to the results from playing the game.

## Description

### BACKGROUND OF THE INVENTION

### Field of the Invention

The present invention relates to a computer system having high security and relates in particular to a computer system incorporating IC cards (or smart cards) capable of storing application programs in an nonvolatile memory and more particularly to a smart card system, a terminal used in the smart card system, and a smart card and returned goods processing method. The present invention for example is an improvement of an invention proposed in 1999 in Japanese Patent Application No. H11-369142.

An IC card (hereafter called smart card) incorporating a CPU (central processing unit) in the IC chip and capable of performing internal calculations is expected to be utilized in a diverse range of fields because of its sophisticated information storage capability and high security, and much progress has been particularly been made in recent years towards utilizing smart cards in financial fields such as electronic money.

Recently, card operating systems (OS) simultaneously holding multiple applications together safely on one card have come into general use.

On smart cards with such a multi-application OS are controlled so that the application programs installed on the card are highly independent of each other when running. Not only a plurality of programs can safely coexist on one card, but also a new application program can be added those cards after a card is issued or an unnecessary application program can be removed from them. Thus, these cards can be regarded as safe computers rather than simple information storage media. From the viewpoint of active use of their highly-reliable security feature or new cards that supercede the conventional magnetic card function, smart cards are expected to have applications in the financial field such as credit cards or electronic money, especially, as the implementation of interlinking a plurality of applications.

Systems such as point systems or customer-loyalty programs (hereafter referred to as point systems) are a typical means to garner customers. Point systems are defined as, "a system such that a customer' s points increase by the use of the customer' s card and the customer can be granted a predetermined service according to the accumulated points." Here, the main feature of acquiring points is intended to have the effect of spurring usage of the card and the store.

Examples of such system are stamp cards in a shopping center, department stores' point systems, or airlines' mileage programs. As one example, a department store's point system is explained below. A customer member carries his/her card issued by the department store. Presenting this card when making a purchase at the affiliated department store, points the member gets, according to how much he/she paid (for example, 20 points are added per 1,000 yens of payment) are accumulated and recorded in the customer's purchase log. When a specified number of points is accumulated, the points can be redeemed for a gift certificate usable at that department store. (For example, 1,000 points can be exchanged for a 1,000-yen gift certificate. In other words, a card member purchasing 50,000 yen worth of merchandise receives a discount equivalent to 1,000 yen). The desire of the consumer to purchase more goods can be stimulated by adding double the usual points during a sales campaign period or granting a higher discount rate when the amount for a one year portion of purchases exceeds a specified amount. In another example, in the mileage program system offered by airline companies, the distance (mileage) flown by the customer is accumulated rather than the prices of the purchased tickets, and when the distance flown reaches a set figure, that customer receives free flight tickets or a seat upgrade service. In this case also, the customer is given an incentive to select the same airline company since services can be obtained according to the customer' s member usage history. By making this point system usable on a smart card, the points accumulated by the card user can be correctly managed on the card. For a smart card with the multi-application OS, linking with electronic money or with credit card facilities can use the point system more effectively.

A system capable of controlling a plurality of point systems on a single point application program was disclosed for example in Japanese Unexamined Patent Publication No. H11-250353 which proposes a method for managing point systems on a smart card.

The adding of game functions to point systems has been proposed in an "IC card system incorporating a game-linked point system" linkedwith point values according to results from playing a game stored on the card. This proposed method was disclosed in Japanese Unexamined Patent Publication No. 2000-207470. In the method proposed in this invention, the count of user-playable is defined as "rights to play game", and by managing the rights to play game and the point value as a result of games, a game within the IC card program can be safely played.

### SUMMARY OF THE INVENTION

The inventors previously filed a Japanese Patent Application No. H11-369142 in 1999 proposed an invention relating to a game-linked point application capable of handling a plurality of game types on a single card application. This invention provide a game application program on smart card, making it possible to increase game variations to run in the program without necessity of complex procedure of application program replacement, so that the card user can readily play various types of games on the one card. The invention also provides the method in which new games can be developed independently of the difference between the various card OSs under which they are to run.

Using the game-linked point system as a means to link card usage with a game as a means to make users eager to utilize the card requires process that is different from the simple point systems in current use. In other words, a game application capable of handling many diverse types of games is required.

Consider for instance, the redeeming or refunding performed after rights to play game were added onto a card after a purchase was made. In a conventional point system, control is rather lax with seals being pasted or stamps being stamped onto paper sheets and the operation can become vague and confused. However in a system that totals the points electronically, when an item is redeemed or returned, a point value is calculated according to a specified number of points added from the refund amount for the returned/exchanged item. That point value is deducted from the total accumulated points, and in the event there are not enough remaining user points due for instance to the points having already been exchanged or redeemed, (when the remaining number of user points is less than the number of points to be deducted) then process is required to show the total points as a minus figure. In a game-linked point system, the figure for points the user acquired will vary according to game-playing results so that the same process as in an ordinary point system that simply adds up a number of points cannot be used.

Additional data such as parameters and game types that can be run must be stored within the card application so that a processing method must be considered for the case that the limited memory storage area on the smart card for storing the game data becomes full.

Furthermore, in a game-linked point system, since the points obtained from playing the game have value, a control method must be evaluated to prevent illegal or incorrect use of the game.

In view of the above, this invention has the object of providing a highly safe and convenient operation management method stressing refund/return process and prevention of illegal operation in game-linked point system for playing a game on a smart card.

This invention has the further object of providing a technology for process in card systems when the transaction causing issuance of a game has been canceled.

This invention has the still further object of providing a technology for processing in card systems when the area for storing the game on the smart card is full.

This invention has a yet further object of providing a technology to prevent illegal use of the smart card system.

In a game-linked point system for running games on a smart card as described above, a highly safe and convenient operation management method is provided as a means to resolve the above mentioned problems as follows.

First of all, when a game is run on a smart card possessed by the user, an average value for the probabilistically acquired points is defined as the, "expected point value". Though this expected point value is different from the points actually acquired from playing the game, the approach of those issuing the game is to grant to the user, points calculated by a specified percentage as viewed probabilistically.

Though the expected point value (of the game) referred to here includes a mathematically defined expectation figure, the expected point value is wider in scope than the mathematically defined expectation figure. The expected point value is not limited to a mathematically determined expectation figure, and for instance includes applying an artificial value considered close to the mathematically defined expectation figure.

Each terminal in the shop were in advance granted "rights to play game" as the necessary points for issuing a game. And when issuing a game onto a card, the points of rights to play game are reduced by an amount equal to the expected point value of the game. The points for issuing this game are purchased from the administrator of the point system at a specified rate and distributed. If the points for issuing the game run low, then new points must be purchased from the administrator of the point system.

By utilizing the expected point value as defined for each game, procedure can be provided which converts the rights to play game into points based on the expected point value, without having to issue the game in the card, as needed. In other words, the system can be equipped with process for substituting the game stored on the card into points as needed, and also process for granting a corresponding point value granted instead of the game, from the time the game was issued onto the card.

Further, in the previously described returned goods process, by utilizing items relating to game issue such as log information, a game corresponding to canceled transaction can be designated and that game deleted or points matching the expected point value can be subtracted from the total number of points on the card.

In order to also operate the system safely, the terminal in the shop is also equipped with an IC chip capable of the same tamper-resistant program processing as the process on the smart card, and this IC chip can also issue games for the card.

The following nine items are next listed as means of this invention for resolving the aforementioned problems.
(1) This invention is contrived such that an "expected point value" for a game issued for a card, is defined as an average value for points probabilistically acquired in the game.
(2) This invention is contrived such that terminals installed in the shops have been allocated the necessary points for issuing games. The shops use these points to issue games onto the cards. Points matching the expected point values are subtracted from the points held by the shop.
(3) This invention is contrived such that an points are usually obtained by the user playing the game stored on the card, however even if the game is not played, points can be obtained by converting the game to the corresponding expected point value of the game.
(4) This invention is contrived such that when the area on the card for storing games is full, a still unplayed game can be selected, that game converted into points by the point conversion process, and after deleting that selected game from the memory, a new game can be stored.
(5) This invention is contrived such that when issuing a game to a card, issuing of a specified point percentage or the issuing of the game can be selected.
(6) This invention is contrived such that when an issuance of a game has been canceled due to redeeming or refunding, then items such as game issue log are utilized to subtract the rights to play game or the expected point value corresponding to the transaction from the card. (Returned goods process)
(7) This invention is contrived such that in returned goods process an equivalent amount of points is returned to that issued the game that was deleted or had points subtracted.
(8) This invention is contrived such that the terminal in the shop incorporates an IC chip capable of safely processing programs and the issuing of games is processed on this IC chip.
(9) This invention is contrived such that in the process between the IC chip on the shop terminal and the smart card, such as issuing a game, issuing points, or returning points during returned goods process, the exchange of data is performed by utilizing encryption process only decodable with both chips.

### BRIEF DESCRIPTION OF THE DRAWINGS

FIG. 1 is a system block diagram showing an embodiment of a smart card system of the invention.
FIG. 2 is a system block diagram for illustrating the operation of the IC card application of the smart card system of the invention.
FIG. 3 is a block diagram illustrating a first game issue procedure for the smart card system of the invention.
FIG. 4 is a block diagram illustrating a second game issue procedure for the smart card system of the invention.
FIG. 5 is a block diagram illustrating a third game issue procedure for the smart card system of the invention.
FIG. 6 is a block diagram illustrating a fourth game issue procedure for the smart card system of the invention.
FIG. 7 is a block diagram for illustrating an embodiment of the overflow countermeasure in the smart card system of the invention.
FIG. 8A and FIG. 8B are block diagrams for illustrating another embodiment of the overflow countermeasure in the smart card system of the invention.
FIG. 9 is a block diagram showing an embodiment of the smart card system corresponding to returned goods process of the invention.
FIG. 10A and FIG. 10B are block diagrams of first and second embodiments of the returned goods processing structure in the smart card system of the invention.
FIG. 11 is a block diagram of third and fourth embodiments of the returned goods processing structure in the smart card system of the invention.
FIG. 12 is a block diagram of fifth and sixth embodiments of the returned goods processing structure in the smart card system of the invention.
FIG. 13A and FIG. 13B are block diagrams of seventh and eighth embodiments of the returned goods processing structure in the smart card system of the invention.
FIG. 14 is a block diagram of a ninth embodiment of the returned goods processing structure in the smart card system of the invention.
FIG. 15A and FIG. 15B are drawings showing a block diagram of the structure of the server for system management, and a user smart card as well as user registration procedures in the first embodiment of the smart card system of the invention.
FIG. 16A and FIG. 16B are drawings showing a block diagram of the structure of a shop terminal IC chip, and a server for system management as well as shop terminal maintenance procedures in the first embodiment of the smart card system of the invention.
FIG. 17A and FIG. 17B are drawings showing a block diagram of the structure of the shop terminal, shop terminal IC chip and user smart card as well as the game issue procedures in the first embodiment of the smart card system of the invention.
FIG. 18A and FIG. 18B are drawings showing a block diagram of the structure of the game play terminal and the user smart card as well as the game playing procedures in the first embodiment of the smart card system of the invention.
FIG. 19A and FIG. 19B are drawings showing a block diagram of the structure of the shop terminal, shop terminal IC chip and server smart card as well as the returned goods procedures in the first embodiment of the smart card system of the invention.
FIG. 20A and FIG. 20B are drawings showing a block diagram of the structure of the server for system management, and the user smart card, as well as the user registration procedures in the second embodiment of the smart card system of the invention.
FIG. 21A and FIG. 21B are a block diagram showing a block diagram of the structure of the shop terminal IC and server for system management, as well a flowchart of the shop terminal maintenance procedures in the second embodiment of the smart card system of the invention.
FIG. 22A and FIG. 22B are drawings showing a block diagram of the structure of the shop terminal, the shop terminal IC chip and user ID card, as well as a flowchart of game issue procedures in the second embodiment of the smart card system of the invention.
FIG. 23A and FIG. 23B are drawings showing a block diagram of the structure of the game play terminal and the user smart card, as well as the game playing procedures in the second embodiment of the smart card system of the invention.
FIG. 24A and FIG. 24B are drawings showing a block diagram of the structure of the shop terminal, the shop terminal IC chip and the user smart card, as well as the returned goods procedures in the second embodiment of the smart card system of the invention.

### DETAILED DESCRIPTION OF THE PREFERRED EMBODIMENTS

The embodiments of the invention are hereafter described utilizing working examples and while referring to the accompanying drawings.

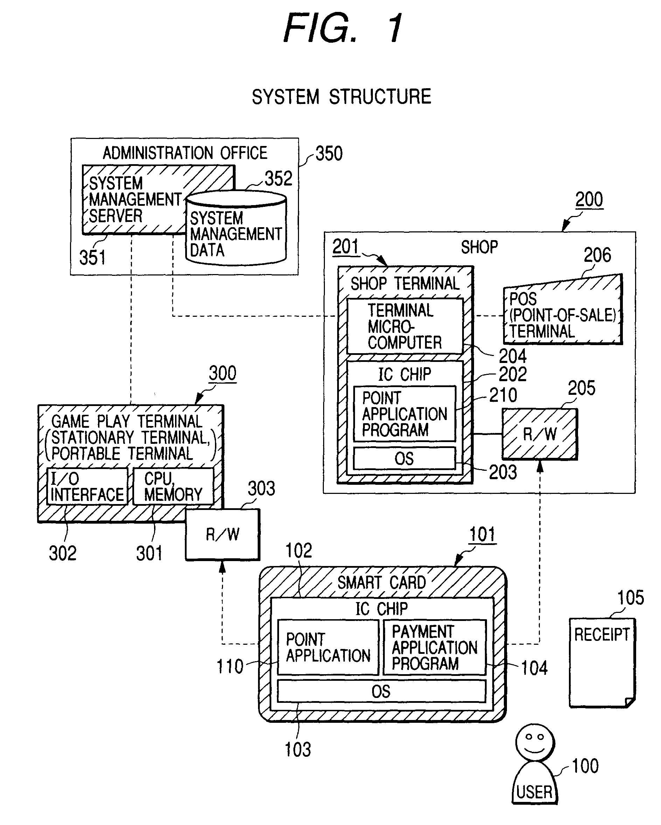

A system block diagram showing an embodiment of the smart card system of the invention is shown in FIG. 1. The figure shows one example of the service concept of the game-linked point system utilizing the smart card achieved by the invention. The system structure is comprised of a smart card 101 possessed by a user 100, a system management server 351 in the administration office 350 for controlling the entire system, a shop terminal 201 installed at a shop 200, and a game play terminal 300 for playing games.

The user 100 has beforehand been issued and retains the smart card 101. The smart card 101 has an OS 103 for handling the multiple applications, and applications are loaded onto the OS 103. In the current example, a payment application program 104 constituting for instance electronic money or a credit card, and a point application program 110 are loaded separately onto the smart card.

Information such as customer information and point information for this system, and information relating to shops are stored in a data storage device on a system management server 351.

Each shop 200 contains at least one or more shop terminals 201 for issuing games to the smart card 101 of the user 100. The shop terminal 201 is dedicated for performing processing for the smart card, and preferably is constantly connected with a cash register and point of sale (POS) terminal 206 to be capable of real-time exchange of payment information, however need not always be connected to the POS terminal 206. An access device called the card reader/writer 205 (hereafter abbreviated to "R/W") for communicating with the smart card 101 must be connected. Alternatively, the R/W 205 may be incorporated into the shop terminal 201. Besides the terminal microcomputer 204, an IC chip 202 is built into the shop terminal 201 to perform processing of the points. An OS 203 is also incorporated into the IC chip 202, the same as the smart card 101, and a point application program 210 is loaded on the OS 203 in the terminal. In case a smart card system with Mondex (A commercial trademark of Mondex International Corp. Electronic money per standard of same company) is already introduced, the shop terminal 201 is assumed as a multi-function terminal with internal IC chips, which can be replaced as needed. However, in this system the terminal need not always be this type of multi-function terminal, and a device capable of information exchange by way of the R/W 205 with the user smart card 101 and the IC chip (or IC card) of the terminal is sufficient.

A game play terminal 300 is a terminal for the user to run games on this system. The game play terminal 300 is comprised of a CPU and memory 301 and I/O (input/output) interface 302 (a screen display or voice output) of signals supporting inputs from the user, and exchanges data with the smart card 101 by way of the smart card R/W 303. This game play terminal 300 may be installed in a stationary terminal, or may be a portable terminal of the individual users. Further, the game play terminal 300 need not be a dedicated terminal exclusively for games. If comprising a smart card R/W 303 and capable of supporting game play, may be an ordinary PC (personal computer), or may be a terminal for handling smart cards having functions such as showing an account balance on the card. In particular in the case of a PC, the game playing application may be distributed as a component over a web browser, even if installed as a dedicated application.

When the user 100 makes a transaction such as a purchase of merchandise in the shop 200, the shop terminal 201 issues game playing rights to the smart card 101 and these rights are received on the receipt 105. When the game is run on the smart card 101 by means of the game play terminal 300, the points on the smart card 101 are updated according to the game playing results. When the points accumulate to a specified figure, the user 100 receives a specified service such as merchandise or discounts in exchange for points. Here, the administration office 350 may manage the point system through the same organization as the shop 200 or another organization may have charge of the point system.

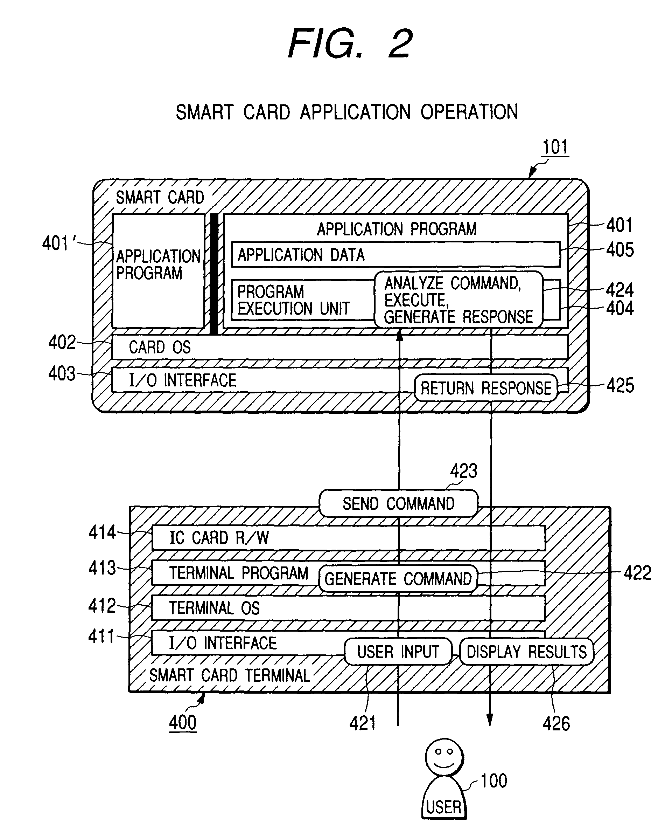

Next, the information flow for implementing a typical program on the multi-application smart card is briefly described by using FIG. 2.

FIG. 2 is a system block diagram for illustrating the operation of the smart card application of the smart card system of this invention. The smart card 101 in this figure contains a card OS 402 and in I/O (input/output) interface 403, one or more application programs 401 are loaded in a specified procedure. The application program 401 and the application program 401' in the figure are separate, independent programs, and both of these programs are prohibited from accessing the other program's data. An IC card R/W 414 and an I/O interface 411 and OS 412 are contained in the smart card terminal 400. At least one or more terminal application programs 413 are loaded in the smart card terminal 400 for handling application programs on the smart card. Usually one or more terminal programs are required for handling one application program of a smart card.

The user 100, inputs commands in step 421 by way of the input/output I/O interface 411, and in step 422 commands are generated in the terminal application program 413 for sending to the smart card 101. The terminal application program 413 in step 423 sends these commands to the smart card 101 by way of the R/W 414. When the smart card 101 receives these commands by way of the I/O interface 403, the smart card 0S 402 checks the command transmission destination of the application program 401, and sends commands to the application program 401 indicated by the terminal application program 413. A program execution unit 404 inside the application program 401 implements in step 424 the process in compliance with these commands, accesses the application data 405, updates values, and generates a response. This response is returned to the smart card terminal 400 in step 425 by way of the I/O interface 403. In step 426, the results are presented in the terminal application program 413. The above process is the flow for implementing a program.

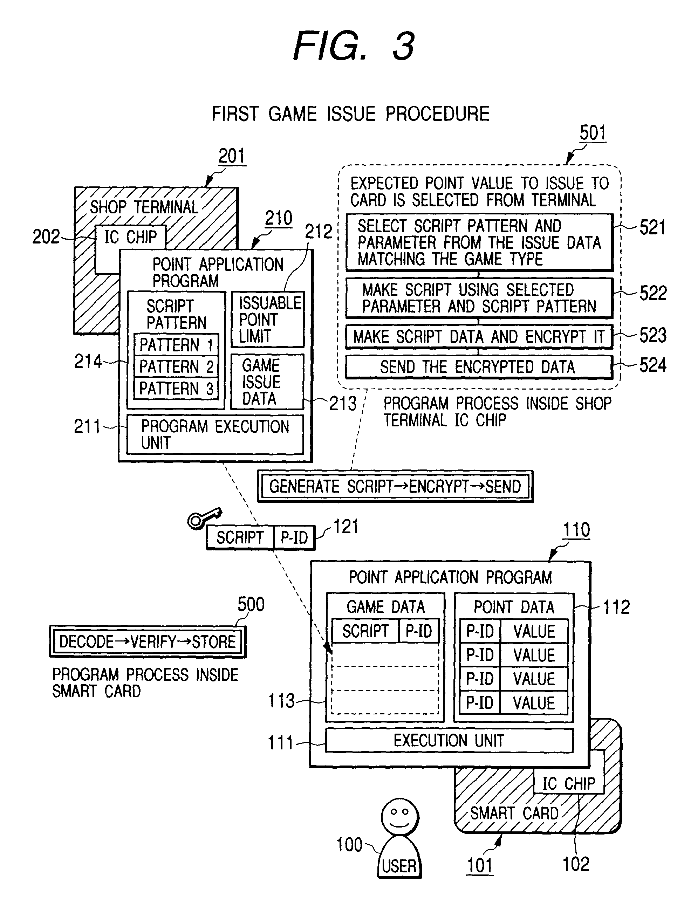

The procedure for issuing the game onto the smart card for the point system of the present embodiment is next described while referring to FIG. 3 through FIG. 6.

FIG. 3 is block diagram illustrating the first game issue procedure for the smart card system of the invention.

The concept of implementing a game application on a smart card, by handling a plurality of game types with a single application by replacing the script defining the game playing procedure was previously proposed in Japanese Patent Application No. H11-369142. With defining the scripting scheme for running games on smart cards, the program execution unit on the smart card interprets and executes the script lines written based on the scripting scheme. The game issuing procedure and system implementation procedure vary according to how to hold the game data, such as written script lines, parameters and rights to play game.

FIG. 3 shows the first game issue procedure, from the making of the game definition script at the shop 200, to the writing of the game on the smart card 101.

The point application program 210 loaded in the IC chip 202 of shop terminal 201 consists of the program execution unit 211 and application data, such as the game issuable point limit 212, game issue data 213 such as parameters relating to game issue, and the script patterns 214. The point application program 110 loaded in the IC chip 102 of the smart card 101 consists of the program execution unit 111 and application data, such as the game data 113 issued from the shop and the point data 112 stored according to the game playing. The "P-ID" here, is a pocket ID for identifying a pocket when point data 112 is managed by being separated into multiple pockets. The point pockets are sometimes set according to the shop or sometimes set by being configured into one collective pocket of a number of affiliated shops. By adding a P-ID to the issued game data (defined script) 113, the P-ID fulfills the task of identifying what pocket will be added with the points acquired in the playing of a game. When the point system is comprised only of a single pocket, there is only one point string, so a P-ID is unnecessary.

The following process 501 is performed by the program 210 in the IC chip of the shop terminal, according to the usage of the card at the shop. From the payment information, the shop terminal 201 designates the expected point value for the smart card 101 and sends it to the program 210 on the shop terminal. The program 210 defines the type of game to issue and the parameters utilizing the game issue data 213 established beforehand (step 521), and then makes the script from the corresponding script pattern 214 (step 522). The program 201 then encrypt the game definition script with a terminal secret key (step 523), send it (encrypted script data 121) to the smart card 101 (step 524). The smart card process 500 decodes the received data and after verification, the data is stored as game data 113 inside the card. Here, the "expected point value" is probabilistic average value of points acquired from playing the game, and is equivalent to the probability of winning multiplied by the number of points acquired from winning.

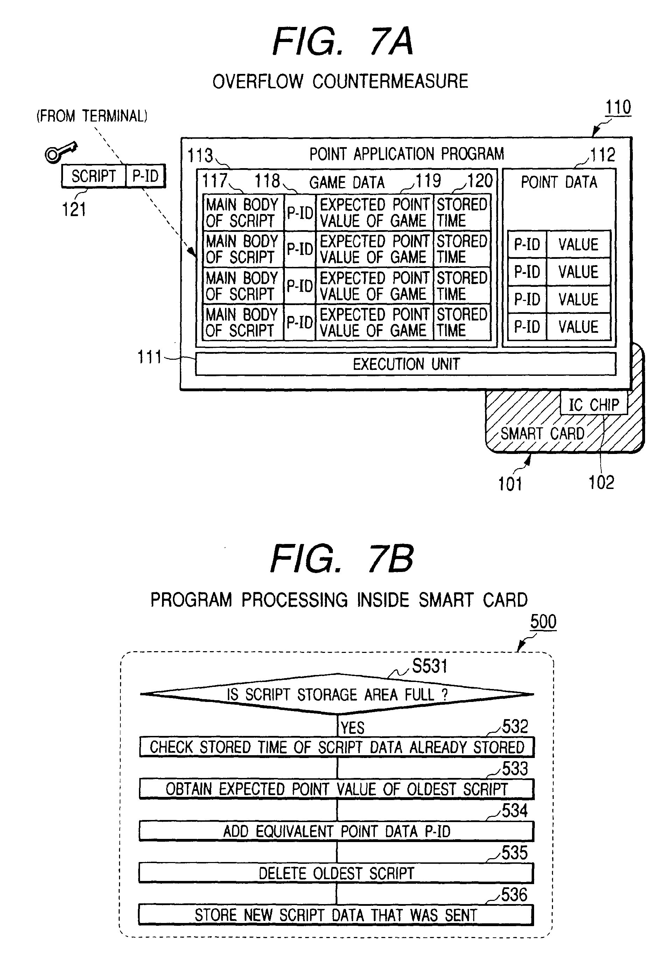

In this method, the script defining the game issue procedures is stored unchanged on the smart card as the rights to play game. In other words, if the script that was issued is stored on the card, then the game defined by that script can only be played one time, and is deleted if the applicable script is run so that the same game cannot be played twice unless the game is issued again. This method is instinctively easy to understand and the structure is simple, however as explained later in FIG. 7, has the problem that many games must be stored at one time on the card.

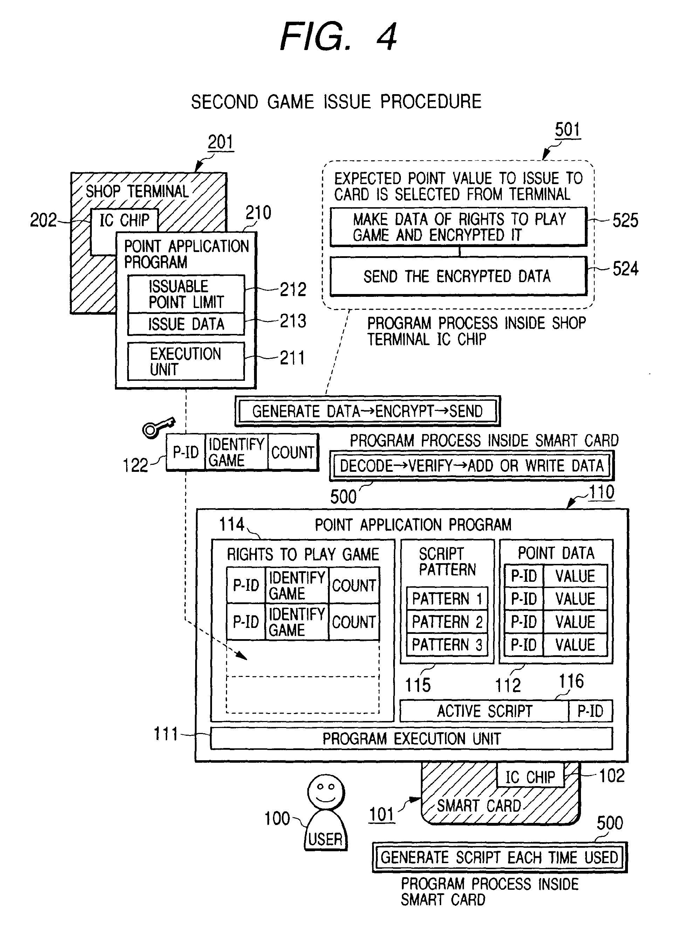

Next, the second game issue procedure is described while referring to FIG. 4 wherein a script pattern is prepared beforehand on the card, and only data of rights to play game is sent from the shop.

FIG. 4 is block diagram for explaining the second game issue procedure for the smart card system of the invention.

The point application program 210 loaded in the IC chip 202 of shop terminal 201 consists of the program execution unit 211 and application data, such as the game issuable point limit 212, game issue data 213 such as parameters relating to game issue. The point application program 110 loaded in the IC chip 102 of the smart card 101 consists of the program execution unit 111 and application data, such as point data 112, rights to play game 114 and the script pattern 115 for writing the script to actually be run. And an area 116 is provided for temporarily storing active scripts.

The following process 501 is performed by the program 210 in the IC chip of the shop terminal, according to the usage of the card at the shop. When the expected point value for the smart card is designated from the payment information, the program 210 defines the type of game (and parameters if necessary) using the game issue data 213 defined in advance.
And then, the program 210 makes the data of rights to play game (how many and which games the user can play), and encrypts it with a terminal secret key (step 525). In step 524, this encrypted data of rights to play game 122 is sent to the card. In the process 500, the smart card program decodes the received data and after verification, and the data is stored as data of rights to play game 114 inside the card. During game play, the game definition script 116 to actually be run is made from the data of rights to play game 114 and the script pattern 115, and the game is run after subtracting the rights to play game. After running the game, the script 116 is deleted.

In this method, the script pattern must be entered beforehand but there is no worry about the card overflowing even if the runnable number of games is increased, because the game play count (number of times game can be run) can be increased. However, the active script 116 must be made within the card every time the game is run so the smart card program process load might become too high.

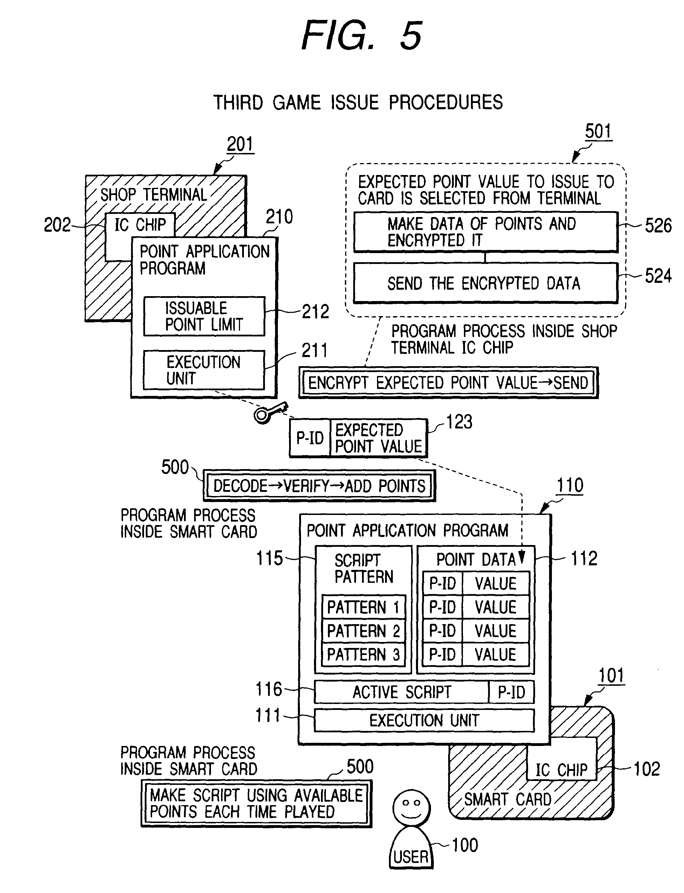

Next, the third game issue procedure is described while referring to FIG. 5 wherein a script pattern is prepared beforehand on the card, points are sent from the shop to the card, and points held by the card are used to run the game.

FIG. 5 is block diagram for explaining the third game issue procedure for the smart card system of the invention.

The method of FIG. 5 can be considered an adapted form of FIG. 4. The shop terminal 201 issues the expected point value to the smart card 101 instead of the rights to play game. The script is made on the smart card 101 utilizing the currently held point value for running the game, and the game defined by the script is then run. In this method, a new game is made using the current point data 112 so that points may possibly be lost if one does not win in the game, this method includes a "gambling" element so there may be a need to limit the number of times the game can be run or to device a new approach to points. The smart card process 500 inside the shop terminal IC chip differs in that point data is made instead of the making of data of rights to play game in FIG. 4, however the other process is the same so an explanation is omitted here. In the smart card process 500 the encrypted points are decoded and added after being verified.

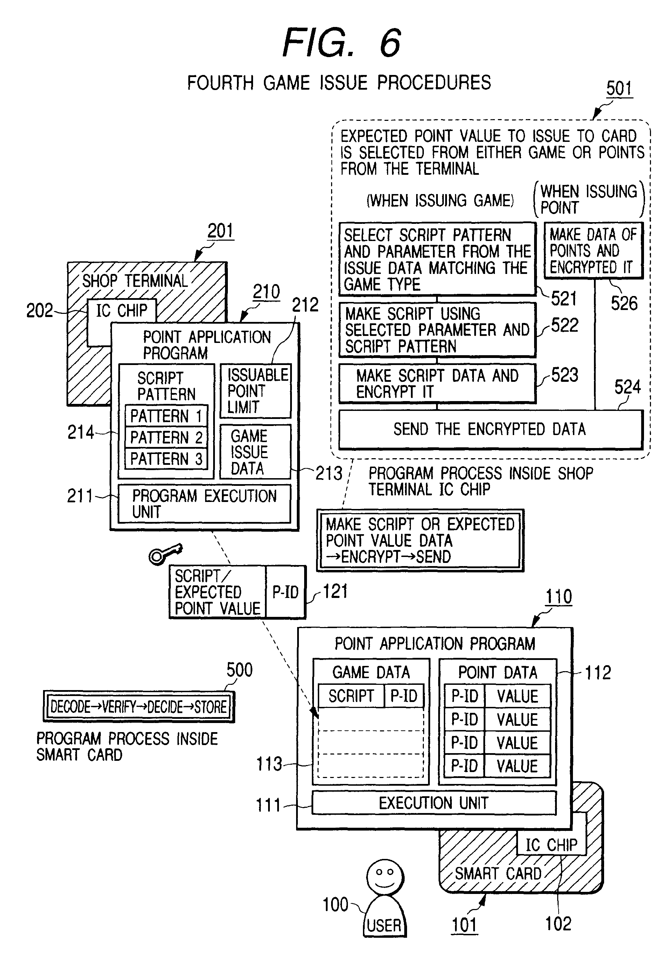

Further, a fourth game issue procedure is described while referring to FIG. 6 wherein the storing of the game script (rights to play game) or storing of corresponding points rather than the game, can be selected.

FIG. 6 is a block diagram illustrating the fourth game issue procedure for the smart card system of the invention.

The issue of points or the issue of a game to the smart card 101 can be selected at the shop terminal 201 if so desired by the user or the shop. This method is configured so that points can be flexibly added in transactions so that even users from the very start, not wanting the issue of a game, can have points added.

In the process 501 in the IC chip 202 in the shop terminal, from the payment information, along with the expected point value to the smart card 101 and selection results designate issue as a game or as a point. If issuing as a game is selected, the scripts are made as the same as in FIG. 3. If issuing as points are selected, point information matching the expected point value data is made in step 526, and then encrypted with a terminal secret key. And then, the encrypted script data 121 is sent to the smart card 101. In the smart card 101, the received data is decoded and verified, and if found to be a game is stored in a specified position and if found be points is added to the point figure corresponding to the P-ID. This figure has been shown as an adapted form of FIG. 3, but if the selection is between rights to play game and point, instead of between script and point, then it is treated as an adapted form of FIG. 4.

In another version, instead of game/point selection is made in each time at the shop, in some shops only game can be issued and in other shops only the point can be issued. In this way, a game-linked point system and a simple point system can coexist on a single application on the card, and a flexible, efficient point system can be achieved.

As therefore shown from FIG. 3 through FIG. 6, different management methods are possible according to whether the method for holding the game data and for script making as performed at the shop or performed on the card. However, what is important here is that since the points acquired in the game have value, the system management takes security into account in the issue of points and making of scripts on the IC chip, the encrypting of data for data exchanges, and eliminating the applicable game when play is ended.

Here, when game issue is selected to be the first issue procedures shown in FIG. 3 or the second issue procedures shown in FIG. 6, some scheme to prevent the card memory area from becoming full is required, since the cards have only a limited capacity. This scheme is hereafter called "overflow countermeasure process" . The overflow countermeasure process is explained while referring to FIG. 7.

FIG. 7 is a block diagram for illustrating an embodiment of the overflow countermeasure in the smart card system of the invention. FIG. 7A is a drawing showing a block diagram of the smart card. FIG. 7B is a flowchart showing an embodiment of the program process with the smart card.

Using this figure, the process in the point application program 110 in smart card 101 when the encrypted script data 121 is sent from the terminal is explained. As shown in FIG. 7A, in the point application program 110 loaded in the IC chip 102 of the smart card 101, besides the program execution unit 111, the game data 113 issued from the shop and the point data 112 stored according to the game result are held. The game data 113 is also stored as individual data defining the game and constituted by a script main body 117, a P-ID (pocket ID) 118 showing the game issuing source, an expected points for game play 119, and a stored time 120.

The smart card program process 500 for the case when the smart card 101 receives the game data and the script storage area is full and has no empty space is shown in FIG. 7B. A check is first made in step 531 as to whether the script area is full or not. When the script area is full, then in step 532 the stored time 120 of the script in the area is checked, and next in step 533 the oldest expected points for game play 119 are obtained. Then, after adding the acquired points to the point data 112 matching the script P-ID applicable to step 534, that script data is deleted in step 535, and after obtaining an empty location to store the scrip in step 536, the script data that was sent is decoded and stored.

In this example the oldest data was deleted based on the stored time 120. However, there are probably methods for deciding the script to delete using P-ID 118 as a clue, and a method for adding the expected points for game play of the newly received game data to the point data is also available. In other words, even in cases where the game definition script data storage area is already full, it is vital the process be performed by a specified method to prevent the received game from becoming lost.

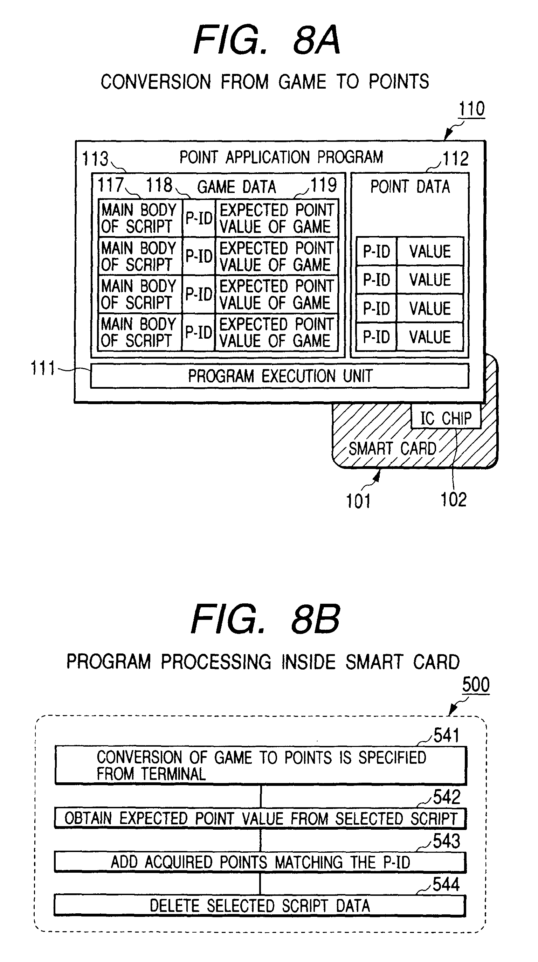

Next, expanding on the "overflow countermeasure" of FIG. 7, a method for converting the game data stored in the card, to points at an optional timing according to the preference of the shop or user is described using FIG. 8.

FIG. 8 is drawings illustrating another embodiment of the overflow countermeasure in the smart card system of the invention. FIG. 8A is a block diagram of the smart card. FIG. 8B is a flowchart shown an embodiment of the program process within the smart card.

The game data stored within the card as rights to play game or as a game definition script is not summed as points as long as the game is not run. This is process to provide a service allowing games stored on the card to be obtained as points for user without the time or environment to run games or even users who do not want to play the games but want to acquire points. The IC chip for the smart card 101 of this embodiment shown in FIG. 8A has no particular need for the stored time 120 such as was shown in FIG. 7A, so the stored time 120 is not provided.

In the smart card program process 500 as shown in FIG. 8B, when the game data converted to point in step 541 is designated (selected) from the terminal in step 541, the expected points for game play 119 are acquired for the game selected in step 542. In step 543, after adding the point data 112 corresponding to the P-ID 118 of the applicable script, the script data is then deleted in step 544. In this example, the game data inside the card is stored in a script format but even game data stored in case format of rights to play game, the data of rights to play game can be converted to points by the same process. Further, the individual game data to convert does not have to be selected one by one but can also be expanded for conversion to points in one batch.

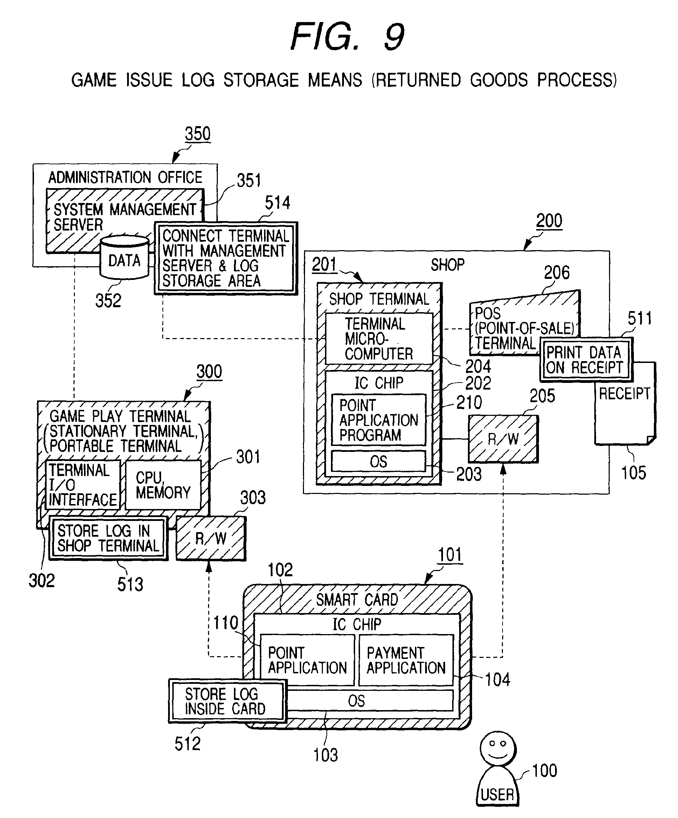

Next, the returned goods process for the game-linked point system is described using FIG. 9 through FIG. 14.

Generally in a point system, when making a refund due to goods being returned or redeemed, the transaction causing points to be granted to the user is supposedly canceled so that the points being granted must also be canceled. In a conventional system, where seals are stuck or stamps are stamped onto a paper card, a loss of points is likely to occur to some degree but in an electronic point system, the points that were granted have value for obtaining some kind of service and that value is in many cases a high value so that when a transaction is canceled an accurate return of the points is required. Even in the related art, in electronic point system using magnetic cards or smart cards, the usual process is subtracting the points of the transaction due to return of goods, from the total number of points. In a game-linked point system, the rights to play game are written onto the card rather than the points themselves, so a specific procedure must be established and used for returned goods process.

First, the game issue logs for the returned goods process must be stored and this is described utilizing FIG. 9.

Methods for returned goods process are of the following two types.
(A) Deleting the game data (itself) supplied in the transaction
(B) Handle the supplied game data as points, and deleting the corresponding points.

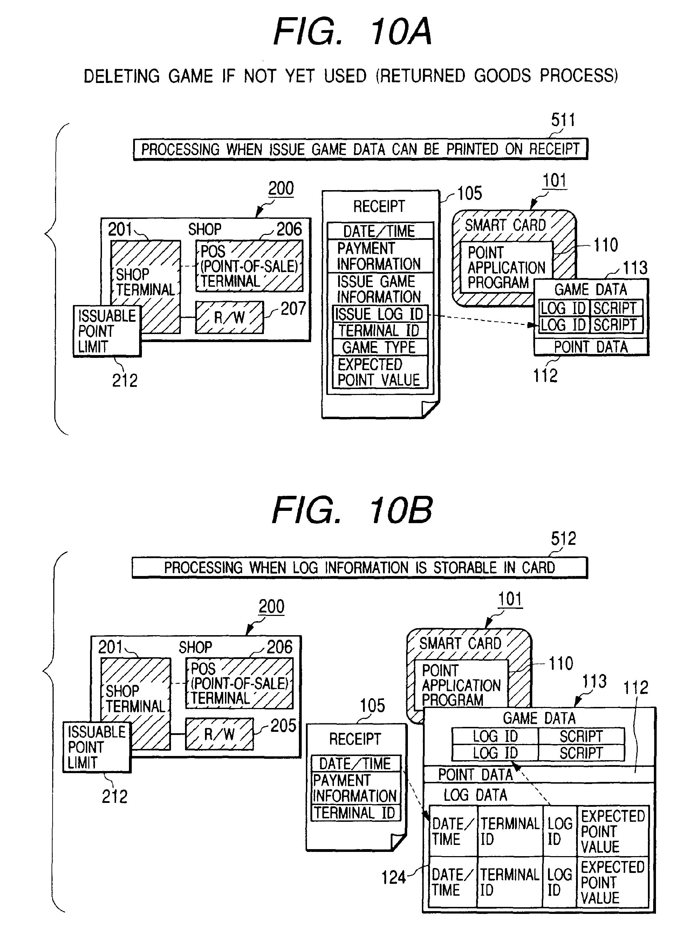

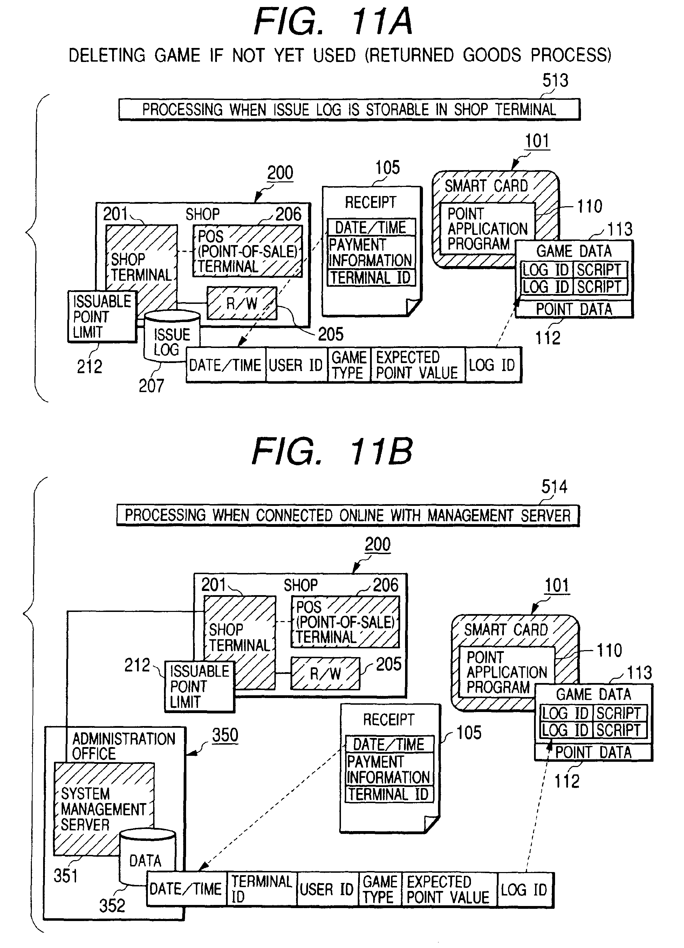

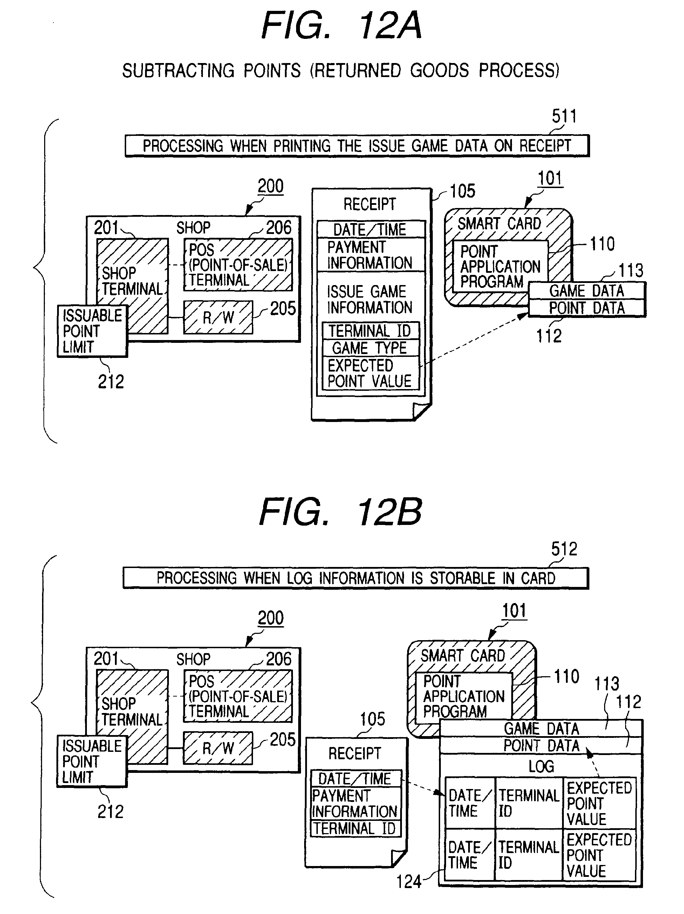

In method (A), the game data to be subtracted is specified from the game data stored in the card, and if the game is not yet used then the applicable game data is deleted, and if already used, then the corresponding number of points is subtracted. Here, in point subtraction from a game that was played, the natural course is to subtract a fixed number of points regardless of whether the user won or lost the game. The concept for this kind of returned goods process is described in FIG. 10 and FIG. 11. In the returned goods process of method (B), the supplied game is handled as supplied points, regardless of whether the game has been played or not, and points in the card are subtracted at a specified rate. Usually this rate corresponds to a "expected point value" probabilistically acquired by playing the game. The concept for this kind of returned goods process is described in FIG. 12 through FIG. 14.

In the explanation for FIG. 3 through FIG. 6, the game issue procedures were described as differing according to method of storing the game in the card. However, the "third game issue procedures" described in FIG. 5 are mainly for supplying "points" to the card so the method (A) cannot be employed, and returned goods process is performed by the method (B). Except for the point that this method the game can be run on the card, the supplying of points and the returned goods procedure can be considered to greatly resemble an ordinary point system.

The "second game issue procedures" of FIG. 4, can utilize either method (A) or (B). However, when using method (A), instead of "delete game data" for the applicable game, the approach of "subtract from rights to play game" is utilized. The "first game issue procedures" of FIG. 3, and the "fourth game issue procedures" of FIG. 6 can use either method (A) or method (B).

Here, a number of methods can be considered for designating (selecting) the corresponding expected point value or the game issue data corresponding to the canceled transaction. In order to designate the game data corresponding to the canceled transaction, some kind of additional information must be stored for reference at the point in time that the game is issued onto the card. The following methods may be considered for this task. These methods are described in FIG. 9.

FIG. 9 is a block diagram showing an embodiment of the smart card system corresponding to the returned goods process of the invention, and shows methods for storing the game issue log for use in returned goods process in a format corresponding to FIG. 1. A total of four typical process methods of this embodiment are related next.
(a) Process 511 for printing game issue information on a receipt
(b) Process 512 for storing game issue log information within the card
(c) Process 513 for storing game issue log information within the shop terminal
(d) Process 514 for making an on-line connection with the system management server, and storing the log information in the management server

The above (a) is a method for printing the game issue information corresponding to the transaction, onto the receipt 105 during game issue. Since the receipt is usually required in order to return the goods, information capable of designating the issued game, is listed on the receipt, and during return of the goods, the game inside the card may be determined based on that information. Though some cost is involved due to the need to modify the POS register, user interest in the game can be increased by listing the game information on the receipt 105 even if unrelated to the return of goods, achieving a clever and effective method.

The above (b) is a method for storing the log information for what transaction the issued game was supplied in the smart card 101. No large modifications are required on the cash register and POS terminal 206 or the shop terminal 201 however storing the log information in the limited memory of the smart card 101 may prove somewhat difficult.

The above (c) is a method for preparing a separate data storage means in the shop terminal 201, and storing the issue log data in the terminal. In this method, modification of the shop terminal 201 is necessary, and the game issue log is only present in the terminal that issued the game so there is no returned goods process for this transaction at other terminals.

The above (d) is a method for storing the game issues log in the data 352 of the system management server 351, with the precondition that the shop terminal 201 is connected online with the system management server 351. If a server is used then there is no problem with memory storage capacity and detailed log data can be stored. This method has the advantage that returned goods process can be performed even at terminals that did not issue the game. This method however has the problem that a load is placed on the network connection between the server and the shop.

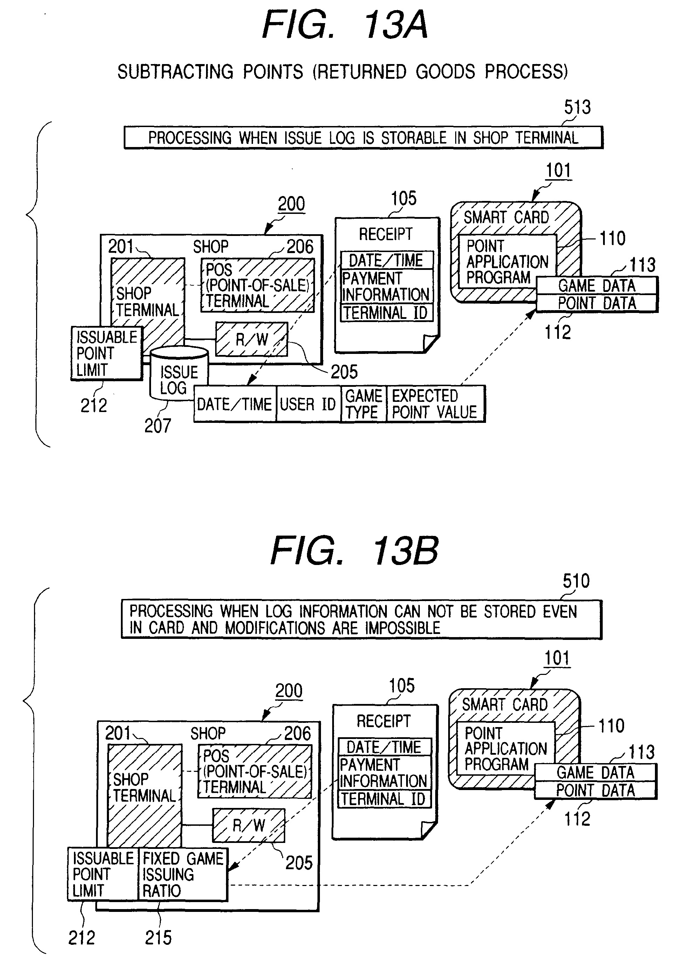

In addition, to (a) through (d), a method (3) is needed for handling returned goods also in the case of 510 where log information cannot be stored (See FIG. 13). when the above methods (a) through (d) are impossible due to the inability to make equipment modifications, then the method (A) cannot be utilized but if the supply rate for the expected point value of the game is fixed, then the method (B) can be implemented. Utilizing method (B) is described later on by using FIG. 13.

FIG. 10 and FIG. 11 are drawings describing the returned goods process when utilizing the "Delete applicable game if not yet run" of (A). The respective four process methods consisting of : (a) process 511 for printing game issue information on a receipt; (b) process 512 for storing game issue log information in the card; (c) process 513 for storing game issue log information in the shop terminal; and (d) process 514 for storing the log information in the management server; are each explained next.

FIG. 10 is block diagrams of the first and second embodiments of the returned goods process structure in the smart card system of the invention. FIG. 10A is a block diagram of the process structure for when the issue game data can be printed on the receipt. FIG. 10B is a block diagram of the process structure for when the log information is capable of being stored inside the card.

The process 511 of FIG. 10A shows the returned goods process when issue game information can be printed on the receipt mentioned above in (a). Besides the date/time and payment information, issue game information such as the issue log ID (number for determining the game), issue terminal ID, issue game type, acquired expected point value can be printed on the receipt 105. During the returning process, by using the information printed on the receipt, game data with the same ID in the smart card can be searched. And if the game data still remains unplayed, the matching game can be deleted (or the data of rights to play game can be subtracted). If the game has been played and does not remain on the card, then the acquired expected point value listed on the receipt can be subtracted from the point data 112.

The process 512 of FIG. 10B shows the returned goods process when the log information can be stored in the card above in (b). A game issue log storage area 124 is prepared inside the smart card 101, and log information such as the date/time, issue terminal ID, game issue log ID (number determining the game), and acquired expected point value can be stored here.

During the returning process, using the date/time information and terminal ID on the receipt 105 the user brought, the log information 124 in the card is referred to. And if the game matching the issue log ID acquired here remains unplayed in the game data 113, then the applicable game is deleted (or the data of rights to play game can be subtracted). If the game has been used and does not remain in the card, then the expected point value acquired from the log information is subtracted from the point data 112.

FIG. 11 is a block diagram of the third and fourth embodiments of the returned goods process structure in the smart card system of the invention. FIG. 11A is an embodiment of the processing structure when the issue log can be stored in the shop terminal. FIG. 11B is an embodiment of the processing structure when an online connection can be made with the management server.

FIG. 11A shows the returned goods process 513 when the log information is capable of being stored in the shop terminal mentioned above in (c). An area 207 for storage of issue log information in the shop terminal 201 is prepared, here are stored log information such as the date/time, user ID, issue game type, acquired expected point value and the game issue log ID (number determining the game). During returning process, using the date/time information the receipt 105 the user brought and user ID on the card 101, the log information 207 on the shop terminal is referred to. And if the game matching the issue log ID acquired here remains unplayed in the game data 113, then the applicable game is deleted (or the data of rights to play game can be subtracted).

If the game has been used and does not remain in the card, then the acquired expected point value obtained from the log information is subtracted from the point data 112.

FIG. 11B shows the process 514 for return of goods when an online connection can be made between the shop and the administration service above in (d). An area for storing the issue log in the data 352 of system management server 351 connected with the shop terminal 201 and here are stored log information such as the date/time, issue terminal ID, user ID issue game type, acquired expected point value and the game issue log ID (number determining the game). During returning process, using the date/time information and the terminal ID on the receipt 105 the user brought and user ID on the card 101, the issue log 352 on the system management server is searched. And if the issue log ID obtained here and the matching game remain unplayed, then the applicable game is deleted (or the data of rights to play game can be subtracted).

If the game has been used and does not remain in the card, then the acquired expected point value obtained from the log information is subtracted from the point data 112.

FIG. 12 through FIG. 14 are drawings describing the returned goods process when the method, "Subtract the expected point value for the game." regardless of the whether the game per (B) was used or not used. The respective five types of processing methods consisting of: (a) process 511 for printing game issue information on a receipt; (b) process 512 for storing game issue log information in the card; (c) process 513 for storing game issue log information in the shop terminal; and (d) log information cannot be stored in the management server; and (e) process 510 when log information cannot be utilized are each explained next.

FIG. 12 is a block diagram of the fifth and sixth embodiments of the returned goods process structure in the smart card system of the invention. FIG. 12A is a drawing showing the processing structure when game data can be printed on the receipt. FIG. 12B is a drawing showing the processing structure when log information can be stored in the card.

FIG. 12A shows in process 511, the returned goods process when printing of game information can be performed on the receipt of (a) above. The issue game information such as the date/time, payment information, issue terminal ID, issue game type, acquired expected point value are printed on this receipt. During return of goods, the acquired point value listed on the receipt 105 furnished by the user is subtracted from the point data 112.

FIG. 12B shows in process 512, the returned goods process when log information can be stored in the card of (b) above. A game issue log storage area 124 is prepared in the smart card 101 and here, log information such as the date/time, issue terminal ID, and acquired point value are stored. During return of goods, the log information 124 inside the card is referred to by utilizing the date/time information and terminal ID on the receipt 105 furnished by the user, and here the acquired expected point value is subtracted from the point data 112.

FIG. 13A is block diagrams of the seventh and eighth embodiments of the return of goods process structure in the smart card system of the invention. FIG. 13A is an example of the processing structure when the issue log is stored in the shop terminal. FIG. 13B is an example of the processing structure when any modifications are impossible and log information cannot be stored in the card.

FIG. 13A shows in process 513, the returned goods process when log information can be stored in the shop terminal (c). The area 207 for storing game issue log storage is prepared in the shop terminal 201 and here, log information such as the date/time, user ID, issued game type and acquired point value are stored. During return of goods, the game issuing log of the area 207 of the terminal is referred to by utilizing the date/time information and the user ID information obtained from the card, and here the acquired expected point value is subtracted from the point data 112.

FIG. 13B shows in process 510, the returned goods process when the log information cannot be utilized in the above (d) and (e). The log information is not located anywhere so the acquired expected point value is calculated from the game issuing ratio and the payment information on the receipt 105 furnished by the user, by utilizing the fixed game issuing ratio 215 and is subtracted from the point data 112.

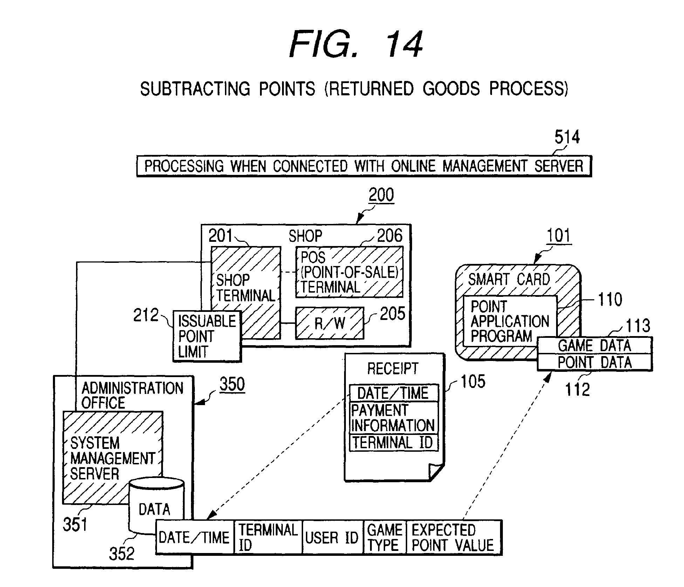

FIG. 14 is a block diagram of the ninth embodiment of the returned goods process structure in the smart card system of the invention, and shows the processing structure when an online connection can be made with the system management server.

FIG. 14 shows in process 514, the returned goods process when an online connection can be made between the shop and the management server. An area is provided for issue log storage in data 352 of the system management server connected to the shop terminal 201, and log information such as the date/time, issue terminal ID, user ID, issue game type and acquired point value are stored here. During return of goods, the server is accessed by utilizing the user ID information obtained from the card, and the terminal ID and date/time information of the receipt 105 furnished by the user, the issue log data 352 is referred to and if the issue log ID obtained here and the acquired expected point value here is subtracted from the point data.

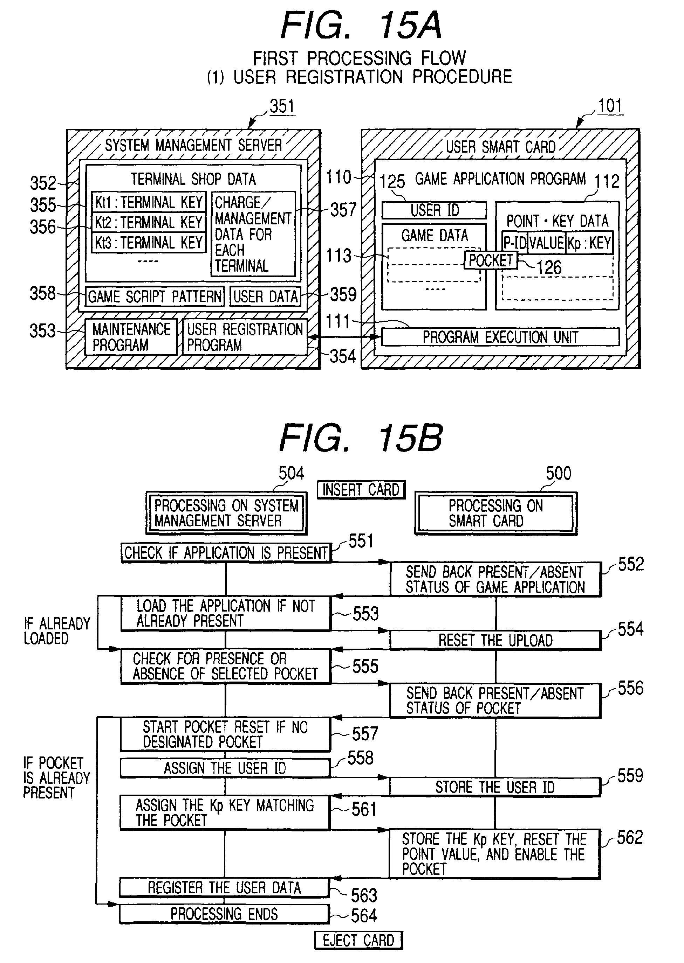

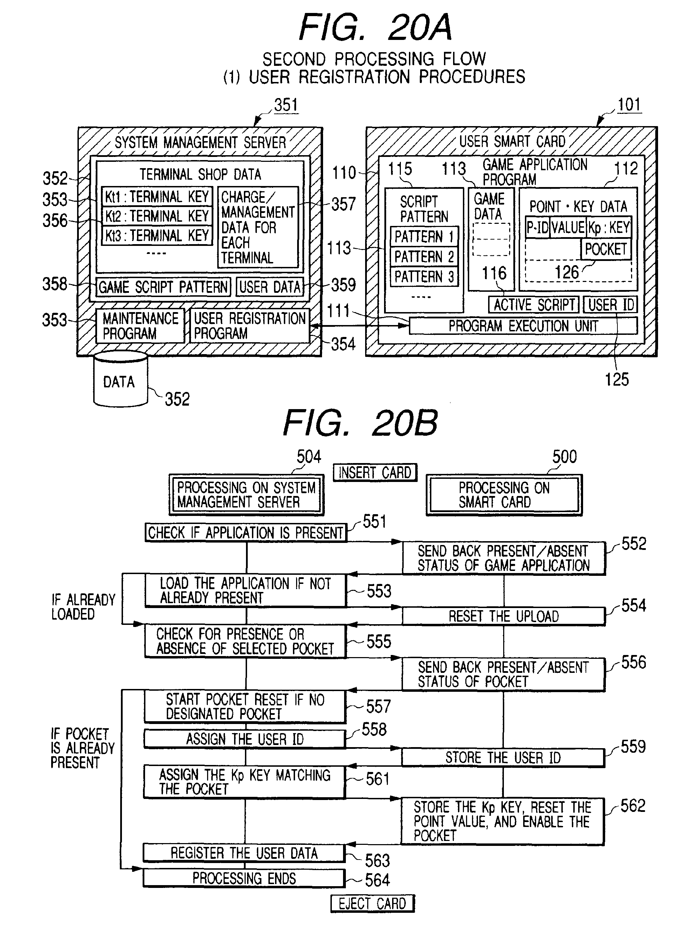

The process flow in the game-linked point system achieved in this invention is shown in FIG. 15 through FIG. 24. The process flow of the first embodiment is described while referring to FIG. 15 through FIG. 19. The process flow of the second embodiment is described while referring to FIG. 20 through FIG. 24.

In the first embodiment described by using FIG. 15 through FIG. 19, a point system is achieved by combining:
· During game issue: the making of a script by the smart chip of the shop terminal (FIG. 3: first issue procedure)
· Returned goods process: (A) Method for deleting applicable game if unplayed
· Log acquisition method: (a) printing game information on the receipt

However, in the second embodiment described while referring to FIG. 20 through FIG. 24, a point system is achieved by combining:
· Returned goods process: (B) Method for subtracting the acquired expected point value.
· Log acquisition method: (d) allowing an online connection with the system management server

In the respective working examples, the process flow is shown for each step in the:
(1) User registration procedures
(2) Shop terminal maintenance procedures
(3) Game issue procedures
(4) Game play procedures
(5) Returned goods procedures

FIG. 15 is block diagrams showing the structure of the server for system management, and the user smart card as well as the user registration procedures in the first embodiment of the smart card system of the invention. FIG. 15A is a block diagram of the system management server and the user smart card required for the user registration procedures. FIG. 15B is a flowchart showing the user registration procedures.

A new pocket is opened in the smart card 101 possessed by the user 100, in a step to allow utilization by shops designated hereafter. In this step, data exchange between the system management server 351 and user smart card 101 is carried out.

When the card is inserted, the system management server 351 in step 551 checks whether or not the application is loaded in the smart card 101. In step 552, the presence or absence of the application from the smart card 101 is reported back.

If the application is not loaded, in step 554, the point application program 110 is loaded in the smart card 101 by the specified procedure and initialized. In step 555, with the application loaded, a check is made to find whether or not a pocket possessing the designated P-ID is present in the smart card 101. In step 556, the presence or absence of the pocket from the smart card 101 is reported back. When determined that a pocket is not present, the system management server 351 starts reset of the user registration and the pocket 126 in step 557, and in step 558, the characteristic user ID 125 for the smart card 125 is supplied to the smart card 101 in step 558. The smart card 101 supplies the applicable user ID to the smart card 101 in step 559. The system management server 351 supplied the characteristic key Kp to the applicable pocket in the smart card 101 in step 561. In step 562, these data are stored on the smart card, and the point value for that P-ID initialized and the pocket validated. In the system management server 351, the information relating to the user in step 563 is registered and in step 564 the process ends and the card is ejected. In this way, the smart card with the registered data becomes usable, and the subsequent steps can be performed.

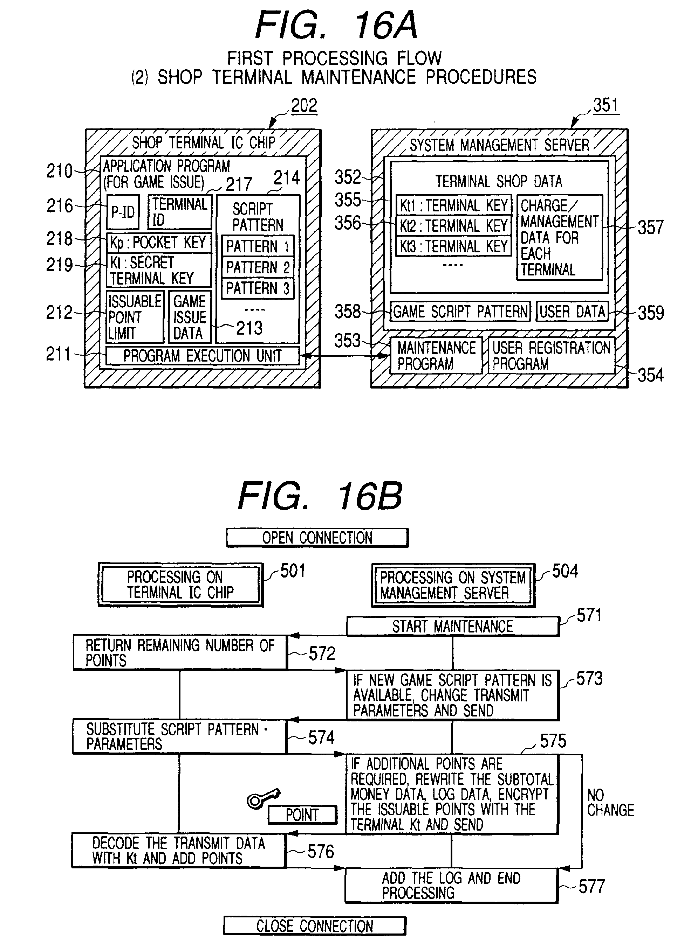

FIG. 16 is a block diagram showing the structure of the shop terminal IC chip, and server for system management as well as a flowchart of the shop terminal maintenance procedures in the first embodiment of the smart card system of the invention. FIG. 16A is a block diagram of the shop terminal IC and system management server required for the shop terminal maintenance procedures. FIG 16B is a flow chart showing the shop terminal maintenance procedures.

In this step, data is exchanged between the IC chip 202 within the shop terminal and the system management server 351.

When the shop terminal in a shop is not usually connected to the system management server, the line connection must first be made. When the maintenance first starts in step 571, the IC chip 202 inserted in the shop terminal sends the required data such as the current remaining issuable points to the system management server 351 in step 572. One or more script patterns 214 for making the game definition script are stored in the application program 210 for issuing the game. When substitution with a new script pattern is necessary, or if changing the parameter 213 for game issue is necessary, then new data is sent from the system management server 351(in step 573). The substitution with new parameters is performed as needed in the shop terminal IC chip 202 in step 574. If there are an insufficient number of game issuable point limits, additional issuable points can be added to the shop terminal IC chip 202 in step 575 by the system management server 351. The additional money data and log data are updated (rewritten) for the adding of point data in step 575, encrypting of the issuable points is performed using the terminal secret key Kt 219 stored beforehand in the terminal, and the encrypted contents sent to the terminal IC chip 202. The issuable point information is stored in the system management server 351 and used in the additional money from the shop. In step 576, the received terminal secret key Kt 219 is decoded in the shop terminal IC chip 202 and stored added to the stored (game issuable point limit 212 after checking that the data is correct. In step 577, after adding the log data in the system management server 351, the connection is closed and the process ends.

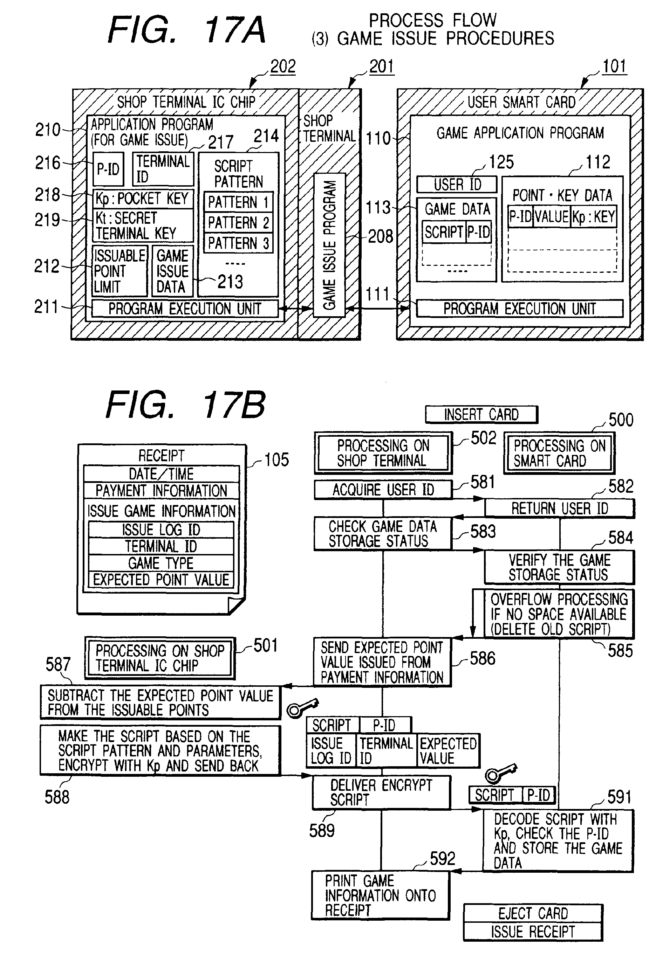

FIG. 17 is a block diagram showing the structure of the shop terminal, shop terminal IC chip and user smart card, and also the game issue procedures in the first embodiment of the smart card system of the invention.

FIG. 17A is a block diagram showing the structure shop terminal, shop terminal IC chip and user smart card required in the user game issue procedures . FIG. 17B is a flowchart showing the game issue procedures.

In this step, an exchange of data is performed between the user smart card 101 and the IC chip 202 within the shop terminal by way of the shop terminal 208.

Rights to play game are issued to the user card 101 according to transactions such as purchases or card usage in the shop. When the smart card 101 is inserted into the shop terminal 201, in step 581, a user ID 125 is requested at the terminal 201. In step 582 the shop terminal 201 verifies the user ID 125. Next, in step 583, the shop terminal 201 requests a check of the game data storage status within the card, and in step 584, the game storage status within the smart card 101 is verified. If already full with game data, the overflow countermeasure process as previously described for example in FIG. 9 is performed in step 585, and an empty space for storing new data in the game data storage area 113 is secured. In step 586, the terminal 201 then sends expected point values acquired from payment information to the IC chip 202 in the terminal. In step 587, the point application program 210 in of the IC chip 202 subtracts the expected point value from the game issuable point limit 212. As the procedures shown previously in FIG. 3, step 588 makes the game definition script 217 using the game issue data 213 and the script pattern 214. After the P-ID 216 is added, the script is encrypted with the pocket secret key Kp 218 and sent with the issue log information to the shop terminal 201. The terminal 201 delivers the encrypted script to the smart card 101 in step 589, and the data received and the pocket secret key Kp decoded in step 591, and after verification is performed, is stored in the game data 113. Further in step 592, the information relating to the issued game goes through the cash register and POS terminal and is printed on the receipt 105. Along with ejecting the card, a receipt is issued and the process ends.

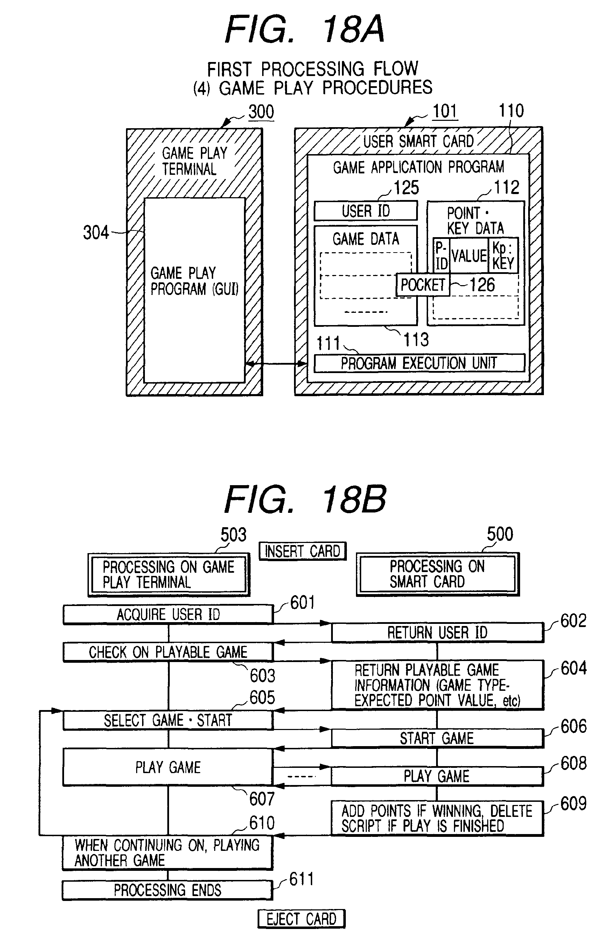

FIG. 18 is drawings showing the structure of the game play terminal and the user smart card, as well as the game play procedures in the first embodiment of the smart card system of the invention. FIG. 18A is a block diagram of the game play terminal and the user smart card required for the game play procedures. FIG. 18B is a flowchart showing the game play procedures.

In this step, data is exchanged between the game play terminal 300 and the user smart card 101. With the game stored in the card, the game playing starts on the card inserted in to the game play terminal 300. The game play terminal makes a request to the smart card 101 for acquisition of the user ID in step 601, and the smart card 101 returns the user ID 125 to the game play terminal 300 in step 602. The game play terminal 300 verifies the user ID in this way. Then, in step 603, the game play terminal 300 sends a request to check of the rights to play game to the smart card 101. Then in step 604, the smart card 101 sends information such as the playable games (game type, acquired expected point value) to the game play terminal 300. In step 605, the game is then selected and starts by the game play terminal 300. This information is transferred to the smart card 101 as shown in step 605, and the game starts. In step 607 and step 608, the game is played by the game play terminal 300 according to the game information stored in the smart card 101. In step 609, the points 112 are summed inside the card matching the P-ID of the game issue source when a win or lucky hit was made in the game. The applicable script is deleted when the game is played, and the same game cannot be played twice. In step 610, when next playing another game, the process returns to step 605. When not playing another game, the process ends in step 611.

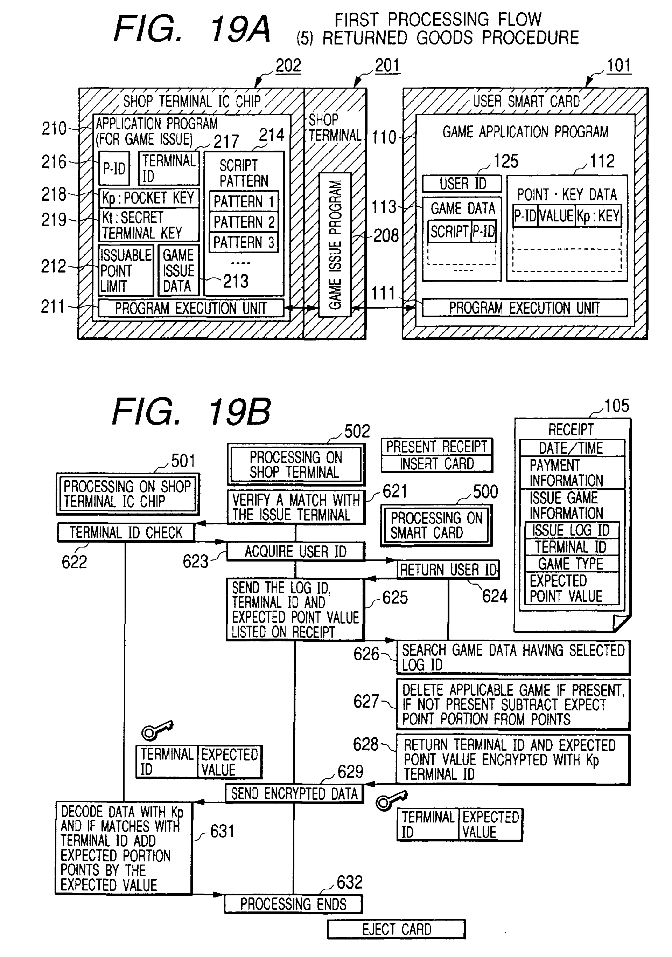

FIG. 19 is drawings showing the structure of the shop terminal, shop terminal IC chip and server smart card as well as the returned goods process in the first embodiment of the smart card system of the invention. FIG. 19A is a block diagram showing the structure of the shop terminal, shop terminal IC chip and server smart card. FIG. 19B is a flowchart showing the returned good procedure. In this step, data is exchanged between the user smart card 101 and the IC chip 202 within the shop terminal.

During return of goods, the process is performed based on information stored in the receipt 105 presented by the user. After inserting the smart card 101 in the shop terminal 201, in step 621 after verifying a match with the issue terminal listed on the receipt 105. And in step 622 the terminal ID is checked on the shop terminal IC chip 202, and in step 623 and step 624, the shop terminal 201 verifies the user ID. In step 625, the shop terminal 201 sends the acquired expected point value, the terminal ID and the log ID listed on the receipt 105 to the smart card 101. In step 626, the smart card 101 performs the play procedures per the process 511 previously explained in FIG. 10. And based on the game issue log ID, the game data possessing the designated log ID is searched for from the game data 113 inside the smart card 101 and the game data for cancellation confirmed. In step 627 if the data to be canceled still remains unused then it is deleted, and if already used and no longer present, then the acquired expected point value is subtracted from the point data 112 of the matching P-ID. If the point data value is insufficient, then the result is a minus point value. Next, in step 268, the point value matching the portion that was subtracted or deleted and combined with the terminal ID is encrypted into the pocket secret key Kp, and sent to the shop terminal 201. In step 629, the shop terminal 201 sends this to the terminal IC chip 202. The data received in step 631 by the program 210 of the IC chip program is decoded and the terminal ID verified, and the point amount corresponding to the portion subtracted from the card, is added to the game issuable point limit 212 within the IC chip. The card is ejected in step 632 and the process ends.

The system process flow in above described first embodiment was divided into five steps and each of these steps has now been explained.

FIG. 20 is drawing showing the structure of the server for system management, and user smart card, as well as the user registration procedures in the second embodiment of the smart card system of the invention. FIG. 20A is a block diagram of the system management server, user smart card required for the user registration procedures. FIG. 20B is a flowchart showing the returned goods procedure.

The reset or initialization procedures are largely the same as in the first embodiment explained in FIG. 15 so a detailed explanation is omitted.

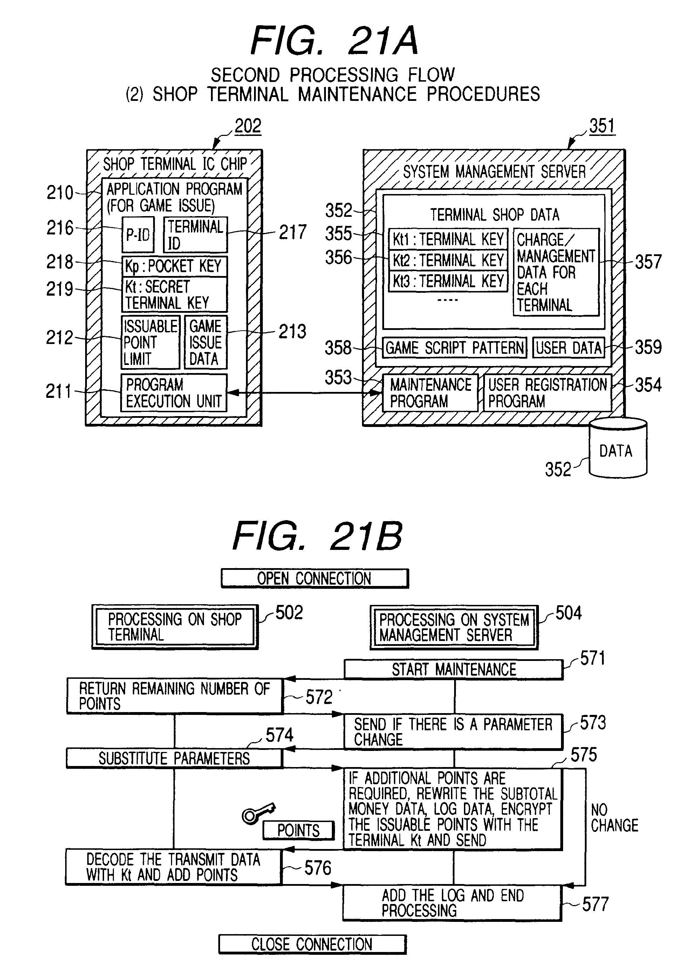

FIG. 21 is drawings showing the structure of the shop terminal IC and server for system management, as well as the shop terminal maintenance procedures in the second embodiment of the smart card system of the invention. FIG. 21A is a block diagram of the shop terminal IC chip and the system management server required for the shop terminal maintenance procedures. FIG. 21B is a flowchart showing the shop terminal maintenance procedures.

The steps in this embodiment correspond to the shop maintenance procedures for the first embodiment described in FIG. 16. However, in this example, the program 210 of shop terminal IC chip 202 does not have a script pattern for making a game definition script so the maintenance process is considerably simplified.

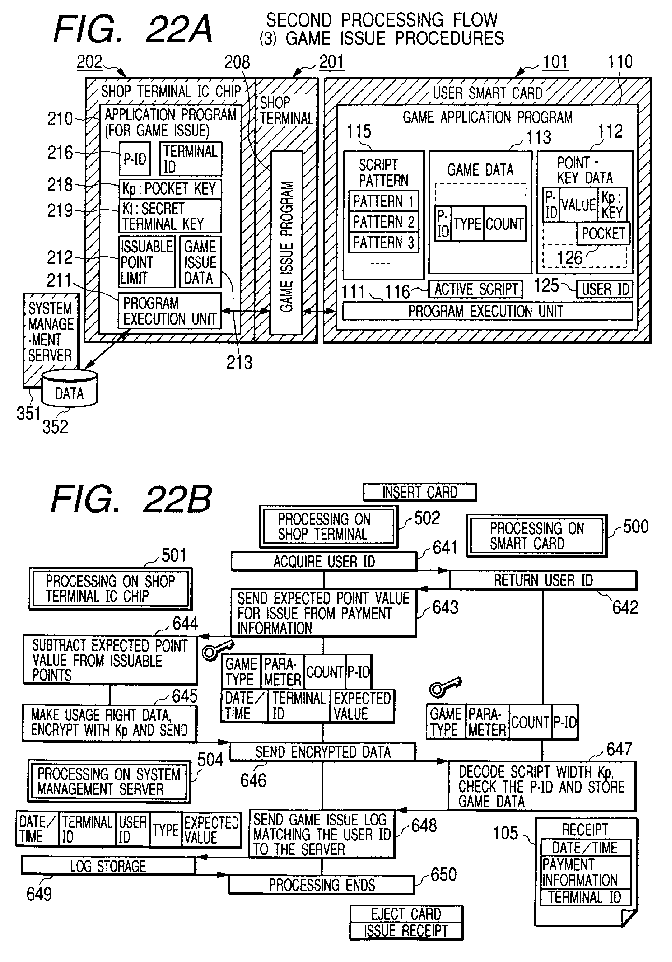

FIG. 22 is drawings showing the structure of the shop terminal, the shop terminal IC chip and user ID card as well as the game issue procedures in the second embodiment of the smart card system of the invention. FIG. 22A is a block diagram of the shop terminal, the shop terminal IC chip and user ID card required for the game issue procedures. FIG. 22B is a flowchart for the game issue procedures.

The card is inserted and when the user ID is verified by way of steps 641, 642, the IC chip 202 within the terminal performs the process per the game issue procedures of FIG. 4.

In step 643, the shop terminal 201 sends the acquired expected point value from the payment information, to the shop terminal IC chip 202. In step 644, the shop terminal IC chip 202 receives the acquired expected point value according to the payment information, and subtracts it from the game issuable point limit 212. In step 645, the data of rights to play game (how many times the game can be played) is made, and is encrypted with the pocket secret key Kp 218 and sent along with the issue log information to the shop terminal 201. In step 646, the shop terminal 201 sends this data to the smart card 101. In step 647, the data is received in the program 110 of the card, and the pocket secret key Kp decoded, and after verifying the pocket secret key Kp, data of the rights to play game is stored in the game data 113. In step 684, the shop terminal 201 receive the game issue information sent from the smart card 101, and sends this information to the system management server 351. In this example, the shop terminal 201 and the system management server 351 are connected online, and in step 649 the game log data sent from the shop terminal 201, is stored in the data 352 of the management server. In step 605, along with ejecting the card, the receipt is issued and the process ends.

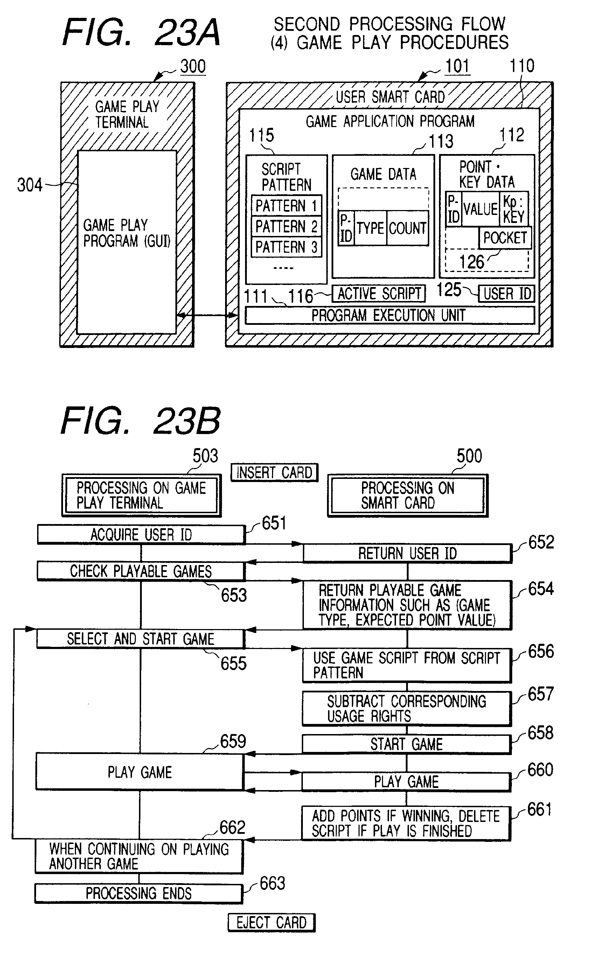

FIG. 23 is drawings showing the structure of the game play terminal and the user smart card, as well as game play procedures in the second embodiment of the smart card system of the invention. FIG. 23A is a block diagram of the game play terminal and the user smart card required for the game play procedures. FIG. 23B is a flowchart showing the game play procedures.

With the playable game is stored in the card, when the card is inserted in the game play terminal 300. After verifying the user ID by way of steps 651 and 652, when the game play terminal 300 in step 653 makes a request to the smart card 101 to check the check the playable games, and in step 652 usable game information (such as the game type and acquired accepted point value) are sent back from the smart card 101 to the game play terminal 300. In step 655, the game playing process start by means of the game play terminal 300 according to the game information stored in the smart card 101. When the game to play is selected, in step 656, the script pattern 115 of the game defined script matching the applicable data of rights to play 113 is utilized in the card program 110, is temporarily stored in the active script 116 and then run. When the game defined script is run, the corresponding rights to play 113 are subtracted in step 657. The game playing process starts by means of the script 116 in step 658, and the game play terminal 300 runs the game by utilizing the smart card 101 in steps 659, 660. And if the user succeeds at the game, results are accumulated in the points 112 in the card matching the P-ID of the game issue source in step 661, and when the game playing process ends, the script 116 that was used is promptly deleted. In the case that another game is next played in step 662, the process returns to step 655. When the game ends the process ends in step 663.

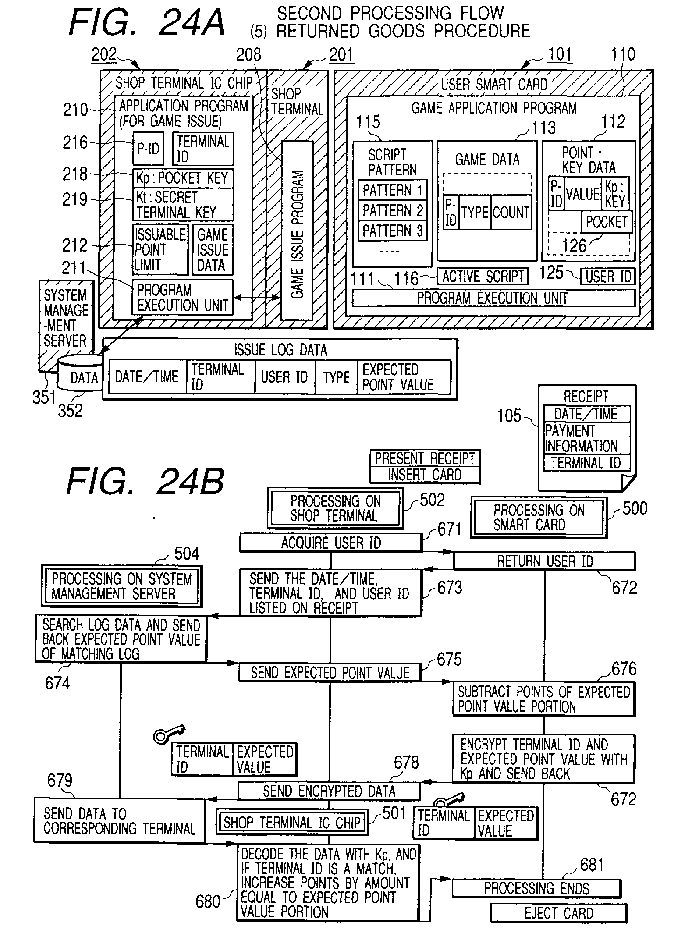

FIG. 24 is drawings showing the structure of the shop terminal, the shop terminal IC chip and the user smart card, as well as the returned goods procedures in the second embodiment of the smart card system of the invention. FIG. 24A is a block diagram of the structure of the shop terminal, the shop terminal IC chip and the user smart card. FIG. 24B is a flowchart showing the returned goods procedures.

The returned goods process is performed as the process previously described in the process 514 of FIG. 14, with the receipt 105 presented by the user. When the smart card 101 is inserted in the shop terminal 201, the shop terminal 201 checks the user ID (steps 671 and 672). Then in step 673 the terminal sends the date/time, terminal ID, and user ID information listed on the receipt 105, to the system management server 351 connected online with the shop terminal 201, and accesses the log data 352 of the system management server 351. The system management server 351 searches the log data 352 in step 674 and sends the matching expected point value of the log data to the shop terminal 201. The shop terminal 201 acquires the expected point value in the applicable game issue log in step 676, and sends this to the point application program 110 on the smart card. In the point application program 110, the expected point value portion acquired in step 675 is subtracted from the point data 112 that matches the P-ID. If the point value is insufficient then the result is a minus point value. Next, in step 677, the point value matching the portion that was subtracted and combined with the terminal ID is encrypted into the pocket secret key Kp, and sent to the shop terminal 201. In step 679, the shop terminal 201 sends this data to the terminal IC chip if it matches the terminal of the game issue source, or if a different terminal, sends the data to the IC chip of the applicable shop terminal by way of the system management server 351, and the data received in step 680 by the program 210 of the IC chip program is decoded and the terminal ID verified, and the point amount corresponding to the portion subtracted from the card, is added to the game issuable point limit 212 within the IC chip. The card is ejected in step 681 and the process ends.

The system process flow in above described second embodiment has now been explained. Two working examples were used to describe the processing flow of the system in FIG. 15 through FIG. 24, however the game-linked point system of this invention is not limited just to these two working examples. Other working examples combining methods such as for holding game information in the card, log acquisition methods and processing methods for return of good as explained previously are also applicable. When creating a system what is important is that factors such as the structural elements and budget be mutually evaluated to construct an optimum point system.

The present invention configured as described in the above embodiments renders the following effects.
(1) By defining the expected point value in a game issued onto a card, the types of process from (2) onwards can be performed rendering the effect that effective point management can be achieved in a game-linked point system.
(2) By distributing the necessary points for game issue to shops, the issue of games onto cards can be performed by shop using these points, so that shops can be prevented from issuing games on their own, rendering the effect that the distribution of points can be controlled in this point system.
(3) By a method for conversion into corresponding points even if the game is not used, even users not wanting or not in an environment to use the games can be supplied with an appropriate number of points according to use, rendering the effect that service to the user is enhanced.
(4) By designating process for the case that the game storage area on the card becomes full, even smart cards with limited capacity can be utilized, rendering the effect that the user can use this point system without wasting memory space.
(5) By selecting the issue of a game or a specified percentage of points during the issue of games onto a card, even users having no intention of playing the game can receive appropriate points according to utilization, rendering the effect that service to the user is enhanced.
(6) By designating the process when a transaction based on game issue has been canceled due to return of goods, a more practical point system can be provided, rendering the effect that the distribution of points in this point system can be controlled.
(7) By providing an arrangement for return of appropriate points to a shop terminal that issued a game that was deleted or points were subtracted in returned goods process, a point system can be managed that causes no losses to the shop.
(8) By incorporating an IC chip to perform program process safely in the shop terminal, and performing that game issue process on this IC chip, the effect is rendered that a tamper-resistant point system can be provided.
(9) By performing data exchange between the IC chip of the shop terminal IC and the smart card with encrypted data, the effect is provided that a point system of improved safety is achieved.

Therefore, the "game-linked points system" of this invention for issuing games on a smart card is capable of providing a highly safe and convenient operating system.

In the embodiments of the invention as related above, in a game-linked point system for running games on a smart card, a highly safe and convenient smart card system designed to perform return goods process and prevent unauthorized process can be achieved.

Also in the above embodiments of the invention, a smart card system can be obtained that handles the case where a transaction forming the basis for issue of a game has been canceled.

Further in the above embodiments of the invention, a smart card system can be obtained that handles the case where an area for storing games on the smart card has become full.

Still further in the above embodiments of the invention, a smart card system incorporating technology to prevent tampering can be achieved.

Technical items relating to the embodiments of the invention are listed as follows.
1. A smart card system incorporating an IC chip containing a CPU, memory storage means and input/output interface, and the acquirable points differ according to the results of game play by means of an application program operating on the IC chip, and specified services can be obtained according to the point value acquired by playing the game wherein, in data relating to rights to play the game stored in the smart card the point value that can probabilistically be acquired from game play is defined as the expected point value.
2. A game play terminal for a smart card system incorporating an IC chip containing a CPU, memory storage means and input/output interface, and the acquirable points differ according to the results of game play by means of an application program operating on the IC chip, and specified services can be obtained according to the point value obtained by playing the game wherein, points required for game issue are distributed and when data involving rights to issue games is issued onto the smart card, the expected point value probabilistically obtained from results of game play of the issued game can be subtracted from the applicable points.
3. A game play terminal according to claim 2 comprised of a terminal internally containing a CPU, memory storage means and input/output interface wherein the application program of the IC chip performs game issue onto the smart card.
4. A game play terminal according to claim 3 wherein the applicable terminal IC chip has a function to utilize a script pattern to generate a game defined script stored in said smart card for handling a plurality of game types by using a single smart card program on the smart card.
5. A game play terminal according to claim 4 wherein the IC chip sends the generated game defined script to the applicable smart card and also subtracts points necessary to run the issued game from a value equal to the applicable expected point value of the issued game.
6. A smart card comprised of an IC chip containing a CPU, memory storage means and input/output interface, and the acquirable points differ according to the results of game play by means of an application program operating on the IC chip, and specified services can be obtained according to the point value acquired by playing the game wherein, the smart card has a function to generate a game defined script inside an application program by utilizing a script pattern.
7. A smart card according to claim 6 for generating a game defined script utilizing a script pattern in the applicable IC chip during game play based on data involving game play rights, and also subtracting the game play rights and deleting the applicable script after running the generated game defined script.
8. A smart card system according to claim 1 wherein a game issue terminal is installed for issuing games onto smart cards and when the game issue terminal is issuing a game onto the smart card, the smart card system has a function to select the sending of rights to issue a game or to select the sending of points.
9. A smart card system comprised of an IC chip containing a CPU, a memory storage means and input/output interface, and the acquirable points differ according to the results of game play by means of an application program operating on the IC chip, and specified services can be obtained according to the point value acquired by playing the game wherein the smart card has a function to perform conversion to points by a specified procedure, even if the game stored inside the smart card is not played.
10. A smart card according to claim 9 wherein when a game stored inside the smart card is converted to points, the conversion to points is calculated by means of the value corresponding to the expected point value of the probabilistically obtainable results of playing the issued game.
11. A smart card system according to claim 9 wherein when the area for storing the game is full, the smart card has a function to store a new game after converting the applicable game into points according to the corresponding expected point value of the game.
12. A smart card system incorporating an IC chip containing a CPU, memory storage means and input/output interface, and the acquirable points differ according to the results of game play by means of an application program operating on the IC chip, and specified services can be obtained according to the point value acquired by playing the game wherein, when a transaction causing issue of a game was canceled due to return of goods, the game data issued in the canceled transaction is identified, and the process to cancel the specified game is performed.
13. A smart card system according to the above 12, wherein the identification of game data for cancellation is performed utilizing the receipt issued at the time of the transaction.
14. A smart card system according to the above 12, wherein the identification of game data for cancellation is performed utilizing the issue log information stored inside the smart card.
15. A smart card system according to the above 12, comprising a game issue terminal for issuing games to the smart card, wherein the identification of game data for cancellation is performed utilizing the issue log information stored inside the game issue terminal.
16. A smart card system according to the above 12, comprising an administration office containing a system management server, wherein the identification of game data for cancellation is performed utilizing the issue log information stored inside the system management server.
17. A smart card of a smart card system comprised of an IC chip containing a CPU, memory storage means and input/output interface, and the acquirable points differ according to the results of game play by means of an application program operating on the IC chip, and specified services can be obtained according to the point value acquired by playing the game wherein, during return of goods, when a transaction causing the play of a game was canceled, the identification of game data issued by the canceled transaction is performed, and during the cancellation process, if the game was not yet used then the applicable game data relating to rights to play game on the smart card is deleted or reduced, and if the game was already used, then the points stored inside the smart card are reduced by a specified percentage.
18. A smart card of a smart card system comprised of an IC chip containing a CPU, memory storage means and input/output interface, and the acquirable points differ according to the results of game play by means of an application program operating on the IC chip, and specified services can be obtained according to the point value acquired by playing the game wherein, during return of goods, when a transaction causing the play of a game was canceled, in the game cancellation process, the points stored in the smart card are subtracted at a specified percentage regardless of whether the game was used or not.
19. A smart card system according to the above 17 or 18 wherein the specified percentage is the expected point value for the applicable game.
20. A smart card of a smart card system comprised of an IC chip containing a CPU, memory storage means and input/output interface, and the acquirable points differ according to the results of game play by means of an application program operating on the IC chip, and specified services can be obtained according to the point value acquired by playing the game wherein, during return of goods, when a transaction causing the play of a game was canceled, after the specified game cancellation process was performed on the smart card, the smart card system has a function to return points back to the game issue terminal that issued the game to the applicable smart card.
21. A returned goods process method in a smart card system wherein said method comprises: a step to play a game by means of an application program on a smart card incorporating an IC chip having a CPU, a memory storage means and an input/output interface, a step to acquire points according to results of the game playing step, a step to identify the game data issued in a canceled transaction when a transaction causing issue of a game was canceled due to return of goods, and a step to cancel the identified game data.
22. A returned goods process method in a smart card system wherein said method comprises: a step to play a game by means of an application program on a smart card incorporating an IC chip having a CPU, a memory storage means and an input/output interface, a step to acquire points according to results of the game playing step, and a step to subtract pre-established points of the applicable game from points stored inside the applicable smart card when a transaction causing issue of a game was canceled due to return of goods.
23. A data process method for smart cards wherein after rights to play game are supplied from the smart card reader/writer of the seller to the smart card of the buyer during a transaction, those rights to play game are designated and canceled when the transaction causing the supplying of those rights to play game was canceled,
   and if the game was played based on those rights to play game, a point value is supplied according to the game play results,
   and game issue from the smart card reader/writer is performed from a semiconductor device having a security function to the smart card by means of the smart card reader/writer.

## Claims

1. A data processing method for smart cards, comprising cancellation process of designated rights to play game after said rights to play game are supplied by the vendor to the smart card of the buyer in a transaction, in the event that the transaction causing the supply of rights to play game is cancelled, and when a game is played based on said rights to play game, a point value is granted according to the game play results.

2. The method of claim 1, wherein said cancellation process includes process for cancelling rights to play game or process to subtract a first specified point value from the current point value if prior to use of said game, and further includes process to subtract a second specified point value from the current point value if after use of said game.

3. The method of claim 1, wherein points corresponding to rights to play game are supplied from the seller to the smart card of the buyer in a transaction instead of supplying said rights to play game, and when the transaction causing the supply is cancelled, designating a point value for the supplied points and cancelling said applicable point value.

4. The method of claim 1, wherein said cancellation process includes subtraction of a specified point value from the point value at that time regardless of whether said game is already played or not.

5. The method of claim 1 or 2, wherein said first specified point value is the expected point value supplied for the game play results.

6. The method of claim 1, wherein the designation of said rights to play game is performed utilising any of the receipt information, the log information on the card, the log information of the shop terminal that issued the game or the log information of the management server issuing the game.

7. A data processing method for smart cards, in which during game data storage on a smart card, when the required storage size is insufficient versus the available storage area, another game previously stored can be designated and the rights to play game of said previously stored game converted into a specified point value, and the storage area of said previously stored game can then be freed for use after adding in the point value at that time.

8. The method of claim 7, wherein after freeing said storage area, said new game data can be stored in said storage area.

9. A data processing method for smart cards, in which the rights to play game themselves or point values convertible into rights to play game supplied at the transaction by the seller to the smart card of the buyer, are purchased in advance by the seller from another party, and rights to play game are supplied to the smart card of the buyer from within the amount purchased by the seller from said other party.

10. The method of claim 7 or 9, wherein said specified point value is the expected point value supplied for the results of the game play.

11. The method of claim 9, wherein a value equivalent to the rights to play game when said rights to play game are supplied, is subtracted from rights to play game purchased beforehand or subtracted from said point value.

12. The method of claim 9, wherein when a transaction causing supply of game rights is cancelled, the subtracted rights to play game or said subtracted point value, are added to the rights to play game or said point value possessed at that time by the seller.
